# EUROPEAN PATENT SPECIFICATION

(11) **EP 3 790 428 B1**
(45) Date of publication and mention of the grant of the patent: **26.06.2024**
(21) Application number: 19729342.6
(22) Date of filing: 08.05.2019
(51) Int. Cl.: A47B 47/00, A47B 77/00, F16B 12/44

(54) **MODULAR FURNITURE ASSEMBLY AND METHOD**
MODULAR MÖBELEINHEIT
ENSEMBLE DE MEUBLES MODULAIRES

(30) Priority: 08.05.2018 EP 18171350
(43) Date of publication of application: 17.03.2021
(73) Proprietor: Infinitas R & D Limited, Hailsham East Sussex BN27 1DW (GB)
(72) Inventor: ARKSEY, Michael, East Sussex BN27 1DW (GB)
(74) Representative: Mewburn Ellis LLP
(86) International application number: PCT/GB2019/051266
(87) International publication number: WO 2019/215443

(56) References cited:
- EP-A1- 0 344 120
- AT-U1- 363
- BE-A5- 1 014 348
- CH-A5- 589 434
- DE-B1- 1 484 277
- US-A- 5 470 139

## Description

### Introduction

The invention relates to modular, frame-based furniture assemblies (e.g. kitchen units).

### Background to the Invention

Conventional furniture units may be produced in either rigid, ready-assembled form or flat-pack form. The units typically comprise cut-to-size and machine prepared timber and decorative panels. The assembled units are assembled into their final shape using appropriate screws, fixings and/or glues. Each separate stage of the assembly process often relies on the professional skill of the tradesman or factory machine operative and the finite condition of his tools and machinery. The materials used are mostly composed of natural materials which may behave differently at various temperatures and humidity levels. The final product will therefore invariably be dimensionally and geometrically imperfect.

Numerous problems exist with conventional furniture (e.g. kitchen) units.

In the case of flat-pack furniture, it is not possible to test the quality of workmanship until after the unit has been assembled.

Even if the units themselves are perfectly square, i.e. have corners forming precise right angles, in many environments where such units are to be installed these areas are not perfectly square. For fitted furniture, the dimensional and geometric imperfections are exacerbated by the fact that the furniture units have to be fitted to both floors and walls - neither of which are typically perfectly flat and smooth (as a result of both imperfections at their time of installation and distortion of these surfaces which may have occurred over time). For example, the walls may not be perpendicular to the floor and/or the floor may not be level. Consequently, when these square kitchen units are placed on a non-level floor, the kitchen units are also not level. This is unsatisfactory both from an aesthetic and practical point of view.

BE 1 014 348 A5 describes a modular frame for furniture comprising beams configured to engage with grooves on connector blocks having multiple connection orientations.

A further concern is that known kitchens involve multiples of individual units. Since each unit is a 'whole' unit, this may result in increased usage of resources. For example, each unit may comprise a pair of sidewalls such that, once two units are abutted against each other, sidewalls of both units are located directly beside each other, although a single sidewall might have been sufficient. Moreover, because the partition walls, such as the sidewalls, may be load-bearing walls, the partition walls are required to have sufficient strength which implies that sufficiently strong material is used in sufficient thickness.

These problems make the installation process of furniture units laborious and time consuming, and require high professional installation skills.

In addition, conventional kitchen units are fixed to the walls of a room and no space is provided between the units and the walls. Therefore, either the units or walls (or both) must be cut to accommodate components that need to be positioned behind the units (e.g. pipes, cables, wires or devices fixed to the wall, such as mains power points, ducting, stopcocks or fuse boxes).

Furthermore, for ready-assembled furniture, transport of the units is difficult and/or expensive due to the large and bulky nature of the packages. Whilst this problem is addressed somewhat by flat-pack furniture units, the time taken to assemble the furniture is long and often requires trained individuals to install the units.

Therefore, there exists the need for kitchen unit assemblies that can be easily transported and quickly and easily installed. Such kitchen unit assemblies should also be able to be dismantled and reassembled easily without causing damage to the units.

### The Invention

The inventor of the present application has found that at least some of the above-identified problems can be solved by providing furniture units created from a modular framework assembly comprising struts and joint components. Partition walls can be inserted into the framework to form separate furniture units.

Accordingly, the invention provides a furniture unit comprising a frame formed of a plurality of struts connected by a plurality of vertex joint components, and wherein the struts define a number of openings within which partition walls are located.

Due to the modular nature of the units, multiple units can be connected together to form a furniture assembly comprising multiple units. There is no limit on the size of the furniture assemblies that can be constructed and therefore the assemblies are suitable for a variety of purposes.

Advantageously, the units can be assembled without requiring specialist tools and do not need to be assembled by a highly skilled individual in the field of furniture construction.

In addition, by contrast to conventional furniture units the structural stability and support is provided to the units and/or assemblies by the struts (rather than by the partition walls/panels). Therefore, the partition walls can be made from thinner and/or more lightweight materials (compared to conventional units where the partition walls must be sufficiently rigid and sturdy to support the whole unit). This results in the furniture units of the invention being relatively lightweight, typically less than half of the weight of conventional furniture units of similar size.

Whilst in specific examples described herein the units are described as forming kitchen furniture, it will readily be envisaged that the units can be used in a variety of other applications for example, as domestic and/or office furniture, site hoardings, site toilets, exhibition stands, marketing suites, greenhouses, garden buildings, waste bin enclosures, garden showers, shop-fitting schemes, toy building kits, garage workshops and allotment tool sheds.

The units of the invention comprise a frame structure and partition walls that are secured within the frame structure and can easily be removed at any time without demounting the unit. The securing may be made by means of a push-fit connection, a friction/interference fit connection or fixings. The frame structure is formed by connecting a number of struts with joint components to provide a.3-dimensional "cubic" or "cuboidal" structure. Different sized and shaped frames can be constructed using the same struts and vertex joint components in a modular fashion.

The frame structure may be based on an orthorhombic or tetragonal lattice structure, wherein the corner pieces are located on the lattice points. In an orthorhombic structure, the unit height, unit width and unit depth are each different. In a tetragonal structure, the unit width and depth unit are the same but these are different to the unit height. Of course, cubic structures are also possible, although less common, where the unit length, depth and width are all the same. In all cases, the lattice structure have three orthogonal axes. The height, width and depth of the units is determined by the length of the struts. According to the present disclosure there is provided an apparatus as set forth in the appended claims. Other features of the invention will be apparent from the dependent claims, and the description which follows.

Accordingly there may be provided a furniture unit (10), comprising: a frame (11) formed of a plurality of struts (20, 40) connected by a plurality of vertex joint components (30), wherein the struts (20, 40) define a number of openings within which partition walls (12, 160) are located.

According to the invention the furniture unit (10) comprises a connector (50, 60, 80, 120, 140) attachable to the frame (11), the connector comprising: a first end (50a, 60a, 80a, 120a, 140a) and, opposite thereto, a second end (50b, 60b, 80b, 120b, 140b); and the frame (11) further comprising a first socket (22, 25, 32, 42, 45) configured to receive the first end of the connector.

According to the invention the connector is attachable to the frame in a first coupling direction.

According to the invention the first end of the connector comprises an end face (55, 65, 85, 125, 145) and a protrusion (54, 64, 84, 124, 144) extending from the end face. The protrusion may also be referred to as an engagement feature. According to the invention the first socket is configured to receive the protrusion of the first end of the connector.

According to the invention the protrusion extends from the end face in the first coupling direction.

According to the invention the first socket (22, 25, 32, 42, 45) is configured to receive the protrusion of the first end of the connector in the first coupling direction (5).

According to some examples, a cross-sectional shape of the protrusion (54, 64, 144) defines a perimeter (56, 66, 146), and the first socket (22, 32, 42) of the frame (11) defines an opening (220, 320, 420) corresponding to the perimeter of the protrusion to locate the protrusion at predetermined orientations with respect to the first socket. According to some examples, the perimeter is polygonal, such as rectangular or square, or elliptical.

According to some examples, the connector is insertible into the first socket to cause the end face (55, 65, 145) of the first end (50a, 60a, 140a) of the connector to abut against the frame (11) and restrict further insertion. According to some examples, the protrusion of the connector is insertible into the opening of the first socket to cause the end face (55, 65, 145) of the first end (50a, 60a, 140a) of the connector to abut against the frame (11) and restrict further insertion.

According to some examples, the vertex joint component (11) further comprises a cavity (350) delimited by an internal surface (390) of a wall (39) of the vertex joint component (30), wherein the opening (320) of the first socket (32) extends through the wall (39) to the internal surface (390); the first end (50a, 60a) of the connector further comprising a first clip (51, 61) for securing the connector to the vertex joint component (30), wherein the first clip (51, 61) comprises a flexible member (51a, 61a) extending in the first coupling direction (5) and a hook (51b, 61b) extending from the flexible member (51a, 61a); wherein the first end (50a, 60a) of the connector is insertible into the first socket (32) to locate the first clip (51, 61) in the cavity (350) and cause the hook (51b, 61b) to catch the wall (39) of the vertex joint component (30).

According to some examples, a strut (20, 40) of the plurality of struts (20, 40) comprises: a second socket (25, 45) configured to receive the second end (50b) of the connector (50) in a second coupling direction (15), wherein the second end (50b) is receivable into a cavity (250, 450) defined by wall (29, 49) of the strut (20, 40); an aperture (23, 43) extending through of the wall (29, 49) of the strut (20, 40), the aperture (23, 43) extending from the cavity (250, 450) to an outer surface of the strut (20, 40), the connector (50) further comprising a second clip (52), the second clip (52) comprising a second flexible member (52a) extending in the second coupling direction (15) and a second hook (52b) extending from the second flexible member (52a); wherein the second end (50b) of the connector (50) is insertible into the second socket (25, 45) to locate the second hook (52b) in the aperture (23, 43) and cause the second hook (52b) to catch the wall (29, 49) of the strut (20, 40).

According to some examples, the first socket (22, 42) is provided as a groove (22, 42) extending along an outer surface of the frame, and wherein: the groove (22, 42) is delimited between a pair of groove walls (28) defining a dovetail shape, and the groove walls (28, 48) are configured to capture the protrusion (64, 144) of the connector (60, 140).

According to some examples, the connector (50, 60) forms a first passage (500, 600) extending between a first opening (502, 602) in the first end (50a, 60a) of the connector and a second opening (504, 604) in the second end (50b, 60b) of the connector, the frame (11) forms a second passage (200, 300, 400) extending from a first aperture (23, 33, 43) to a second aperture (23, 33, 43) formed in the opposite side of the frame (11), wherein the first passage (500, 600) and the second passage (200, 300, 400) extend in the first coupling direction (5); the furniture unit (10) further comprising a leg (70) comprising: a foot end (73) and a threaded end (74), the threaded end (74) insertible into a tapped section of the first passage (500, 600) extending through the connector (50, 60); wherein the leg (70) is configured to engage with a tool insertible through the second passage (200, 300, 400) and the first passage (500, 600) to rotate the leg (70) in the tapped section of the first passage (500, 600) between a first configuration and a second configuration, the distance between the connector (50, 60) and the foot end (73) of the leg (70) being different in the first configuration and the second configuration.

According to some examples, the connector (60) further comprises a secondary protrusion (68) extending from the first end (60a) of the connector in the first coupling direction (5), wherein a strut (20, 40) of the plurality of struts (20, 40) defines a secondary aperture (23, 43) configured to receive the secondary protrusion (68) of the connector (60), wherein the secondary protrusion (68) and the first passage (500, 600) of the connector are separated by a distance corresponding to the distance between the secondary aperture (23, 43) and the second passage (200, 300, 400) so that the secondary protrusion (68) is locatable in the secondary aperture (23, 43) to align the first passage (500, 600) and the second passage (200, 300, 400).

According the invention the second end (80b) of the connector (80) further comprises a bulbous member (86); the furniture unit (10) further comprising a wall anchor (90) comprising a pair of rails (92) extending substantially parallel and an open-ended channel (94) defined between the rails (92); wherein the bulbous member (86) is insertible into the channel (94) and the rails (92) are configured to capture the bulbous member (86) within the channel (94).

According to some examples, the first end (80a) of the connector (80) comprises a first threaded segment (84) extending in the first coupling direction (5) and the second end (80b) of the connector (80) comprises a second threaded segment (86) in the first coupling direction (5), the first threaded segment (84) being complementary to the second threaded segment (86), wherein the first end (80a) of the connector (80) is rotatable relative to the second end (80b) of the connector (80) to adjust the distance between the first end (80a) and the bulbous member (86) of the second end.

According to some examples, the first end (80a) of the connector (80) comprises another bulbous member (81), wherein the bulbous member (81) of the first end (80a) is captured in the first socket (32) of the frame (11).

According to some examples, the second end (120b) of the connector (120) comprises a bracket (126) configured to capture a pipe or cabling.

According to some examples, the furniture unit (10) further comprises a removable partition wall (160), wherein a first edge (161) of the removable partition wall (160) is located in the groove (22, 42) extending along the frame (11); and wherein the second end (140b) of the connector (140) comprises a pair of walls (147) between which a recess (148) is defined, the recess (148) configured to receive the first edge (161) of the removable partition wall (160).

The struts generally have a cross-section that is constant or substantially constant along its entire length. The struts may take the form of an extruded cuboid and hence the cross-section of the strut may be substantially square, rectangular, rounded-square or rounded-rectangular. The struts typically have four sides and two ends wherein each of the two ends has an opening.

The struts may be hollow along their entire length. Alternatively, the struts may be solid and have openings at each end at facilitate connection to the vertex joint components. As the struts have a constant cross-section, numerous struts can be formed by extruding the struts as a single piece and then cutting them to the required length by the user. As the length of the struts determines the dimensions of the assembly frame, the assembly size can be advantageously customised by simply cutting the struts to the desired sizes.

The struts may comprise a channel or groove along the whole or a substantial part of their length. The channel or groove may be located on one or more of the faces of the strut, but is typically located on all (e.g. all four) longitudinal faces of the strut. The channel or groove is preferably positioned centrally with respect to the width of the strut. This allows the struts to be connected in multiple orientations / rotational configurations, such that a continuous channel is formed by adjacent, connected struts. The channel may be dovetail-shaped in cross-section such that a complementary shaped partition wall may be slid into a channel from one of the ends of the strut, but is secured against lateral removal (i.e. being pulled out in a direction perpendicular to the face of the strut in which the channel is located).

The units may be constructed using two different types of struts: horizontal struts (for constructing edges of the unit which run parallel to the ground) and vertical struts (for constructing edges of the unit which run perpendicular to the ground). The vertical struts may be provided with holes for fitting one or more fixings to support other features or parts of the furniture unit (see further details below).

The struts are typically formed of (preferably extruded from) a light-weight material which is sufficiently rigid to form a frame and strong enough to hold the desired contents of the units (including the partition walls and any doors, drawers or shelves). Examples of such materials include aluminium, plastics (such as unplasticised polyvinyl chloride (UPVC)) or biocomposites.

The struts and vertex joint components are typically provided with complementary push-fit connections (e.g. plug and socket connections) so that they can be connected without requiring any tools or adhesives. The term "push-fit" as used herein refers to a connection that can be made between two component parts with moderate hand pressure by the assembler.

The struts and vertex joint components can therefore be connected together by merely pushing the two components together until they lock together such. Such a locking action may be provided by a snap-fit or click-fit action to provide an interference fit to retain the components together. Once connected, the struts and vertex joint components cannot be simply pulled apart.

The vertex joint components may be, and are typically, substantially cubic or cuboidal (preferably cubic) in structure. In other words, the joint components have three pairs of parallel faces, wherein each pair of faces are perpendicular/orthogonal to the other two pairs of faces.

For example, the vertex joint components may comprise a central portion having at least three sockets on orthogonal faces of the central portion. The at least three sockets allow for three struts to be connected to the joint perpendicularly to each other. Further sockets may be provided to allow for colinear or perpendicular connection of further struts to the at least 3 sockets. The joints may also comprise recesses within which the sockets are located, in order to direct the struts into the sockets. The sockets may take the form of circular openings in the faces of vertex joint components. Typically, the vertex joint component takes the form of a cube with one face removed and has sockets (and optionally recesses) on its five faces.

Alternatively, the vertex joint components may comprise a central portion having at least 3 prongs projecting in orthogonal directions from the central portion. The three prongs are each perpendicular to each other and further prongs may be provided which are either colinear or perpendicular to one of the 3 orthogonal prongs. These vertex joint components may be formed as a single unit and hence the prongs may be integrally formed with the central portion. Alternatively, the joints may comprise a central hub wherein prongs can be removably attached to each of the faces of the cube. The central hub may be cubic in shape. The prongs may be removably attached to the central hub by means of, for example, a screw-fit or push-fit connection. This has the advantage that joints of different shapes (and with different numbers of prongs) can be formed from only two different manufactured components (i.e. central hubs and prongs). The prongs on the vertex joint components can then be received in the openings in the ends of the struts.

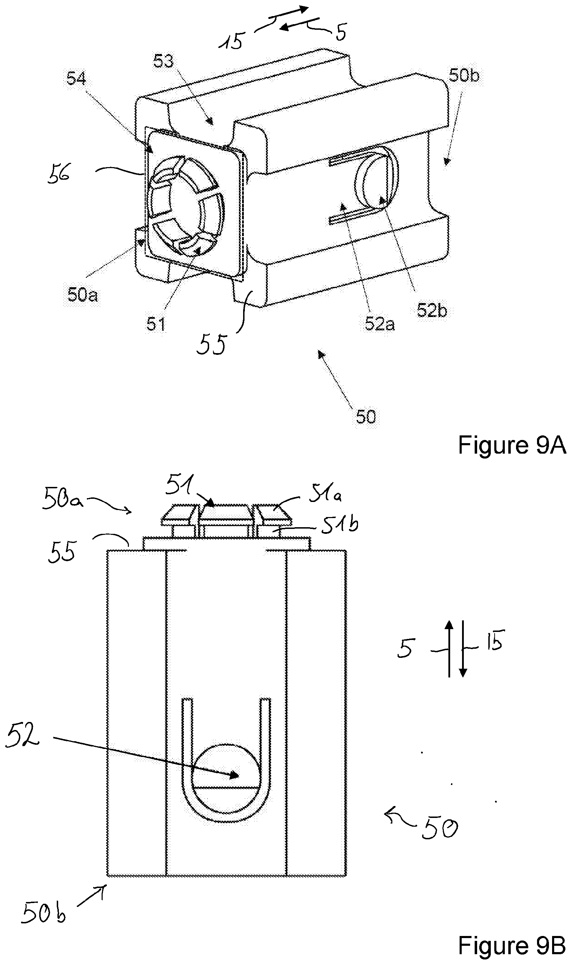

Examples of push-fit connection constructions may comprise a plug formed of a pliable, deformable or flexible material which is shaped to enable it to be inserted into an opening/socket but so as not to be easily removable. For example, the plug may comprise a number of pliable walls having a tapered upper portion and a lower portion with a width less than the maximum width tapered portion. (see Figure 9B). Therefore, when the plug is inserted into a socket (e.g. an opening), the tapered shape of the upper part allows the plug to deform in shape such that it can enter the socket. Once the upper portion has passed through the socket, the plug reverts to its original shape and due to the relative widths of the upper and lower portions, the plug cannot simply be pulled out of the socket.

Accordingly, the struts may comprise protrusions which engage with openings in the joints or the struts may comprise openings at their ends which engage with protrusions on the joints.

As an alternative, the units may make use of double-ended connectors for connecting the struts and the vertex joint components. One end of the double-ended connector may be configured to form a push-fit connection with an opening in the vertex joint component and the other end may be configured to form a push-fit connection with an opening in the end of the strut. The push-fit connections may be of the type as described herein.

The components parts of the assembly are typically manufactured with a tolerance of 0.2mm to allow for suitably secure push-fit connections to be made between the components. The component parts can therefore be made by extrusion moulding.

The frame structure may be compartmentalised by partition walls to separate the frame structure into individual compartments of the furniture assembly. The partition walls are held within the spaces defined by four connected struts (which form a square or rectangular opening) by the channels/grooves in the struts.

In the assemblies of the invention, the individual units share partition walls with adjacent units. In conventional furniture assemblies, individual box units are simply placed next to each other. Therefore, the thickness of the walls separating each compartment in conventional kitchen furniture are effectively at least twice as thick as in the assemblies of the present invention. Hence the assemblies of the invention are considered to be more space-efficient than conventional furniture (e.g. kitchen) units.

The partition walls or struts may be fitted with one or more fixings to support other features or parts of the furniture unit. For example, the struts may be fitted with door hinges, shelf supports or drawer runners to allow doors, shelves or drawers to be fitted to or in a unit within the assembly.

The frame may be fitted with one or more vertically adjustable support members, for example feet. The height of each support member can be individually adjusted up and down to ensure that the frame is level. Due to the cubic structure of the vertex joint components, once constructed, all struts within the frame are perpendicular or parallel to the other struts in the frame. Therefore, provided the struts at the base of the frame are level, all aspects of the assembly will also be level. The term "level" as used herein may refer to a plane which is substantially perpendicular to the force of gravity. Alternatively, the term "level" may be relative to other features of the room (i.e. at 0° or 180°).

The vertically adjustable support members may comprise an upper element and a lower element each with a complementary screw-thread. The height of the vertically adjustable support members can therefore be altered by relative rotation of the upper and lower elements. Preferably, the lower element comprises a formation (e.g. a hexagonal recess, a cross-shaped recess or a straight slot) which is accessible when the upper and lower elements are connected together, and can engage with a tool (such as a screwdriver) so that the elements can be rotated with respect to each other even once the vertically adjustable support members are attached to the frame of the units.

The use of the vertically adjustable support members provides a levelling system for the furniture unit. The feet are adjusted to provide a horizontal datum. As the struts connect with one another at 90° angles, provided that the base "datum" layer of struts is horizonal, the remaining struts and hence the partition walls will all be substantially vertical or horizontal.

Although the frame is constructed such that it is vertical, the walls in the room in which the furniture unit is to be installed may not be perfectly vertical. Therefore, a void may be provided between the rear of the furniture unit and a wall. The size of the void is adjustable by moving the furniture units towards or away from the wall. Therefore, as the furniture unit is not connected or positioned in contact with the wall, any imperfections in the shape wall are not transferred to the furniture unit. This also has the advantage that the units can be installed against walls upon which other objects mounted or attached (for example, cables, pipes, etc) as following installation of the units, these are located in the void between the wall and the unit.

The units may also comprise a rear screen (also referred to as a "splashback"). The screen may be hingeably connected to the unit to allow access to the wall behind the screen. Alternatively, the splashback may sit in a rebate in an upstand of the worktop. The splashback may also be held in place at the top with clips (preferably spring-loaded clips) which secure the top of the splashback to a strut of the frame. Therefore, the units may be installed such that there is a gap or void between the rear of the units and the wall. Typically, the wall may have mounted thereon pipes, electrical cables and other ducting. The splashback therefore covers these pipes/cables/ducting so that they cannot be seen in normal use. Alternatively, the screen may be removably connected to one or more struts of the assembly to allow either access to the area behind the screen or replacement of the screen.

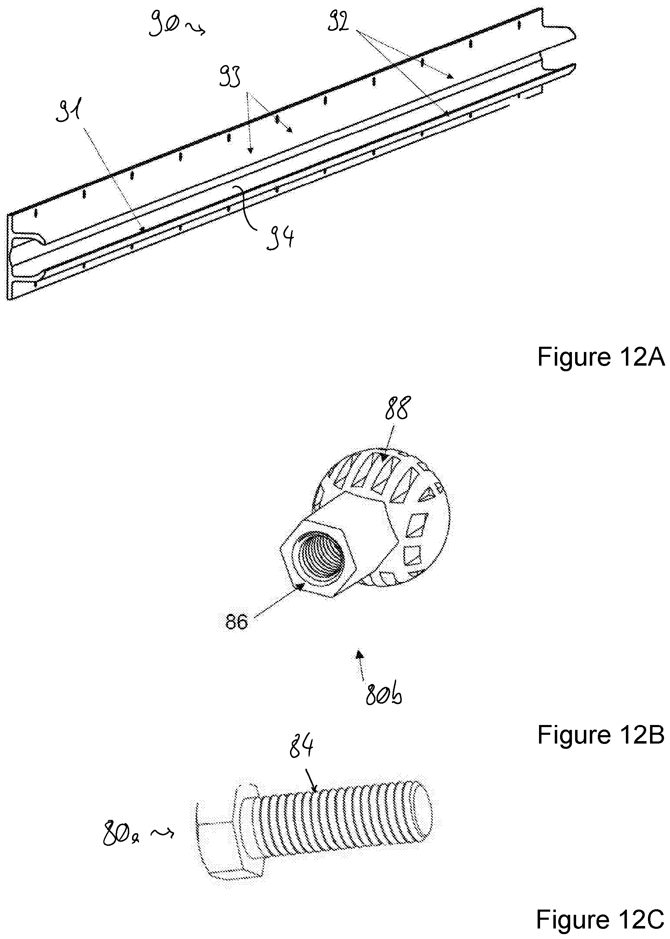

The units may further comprise one or more anchor assemblies for securing the units to a wall. The anchor assemblies are designed/chosen to provide support for the units but without distorting the perpendicular structure obtained by the assembly of struts and joints. The anchor assemblies are therefore preferably adjustable so that they can be positioned to provide support to the units without distorting their shape. The anchor assemblies may be adjustable in multiple directions, for example via a slidable ball-and-socket joint. in the slidable ball-and-socket joint, the ball is preferably slidable in a lateral direction along an anchor rail having an elongate channel providing a socket and in additionally pivotable within the socket (see Figures 12A, 12B, 12C).

Clips may be attached to the rear of the units (either to the struts or to the joints) to allow flexible tubing or pipes to be attached to the units.

The invention also provides a kit of parts for constructing a furniture unit as described above.

Figures 1-8 and 12-19 and 22-24 describe specific examples according to the invention with a bulbous member in the second end of the connector.

Figures 9A, 9B, 10A, 10B, 11 and 20-21 show examples useful for understanding the invention.

### Brief Description of the Drawings

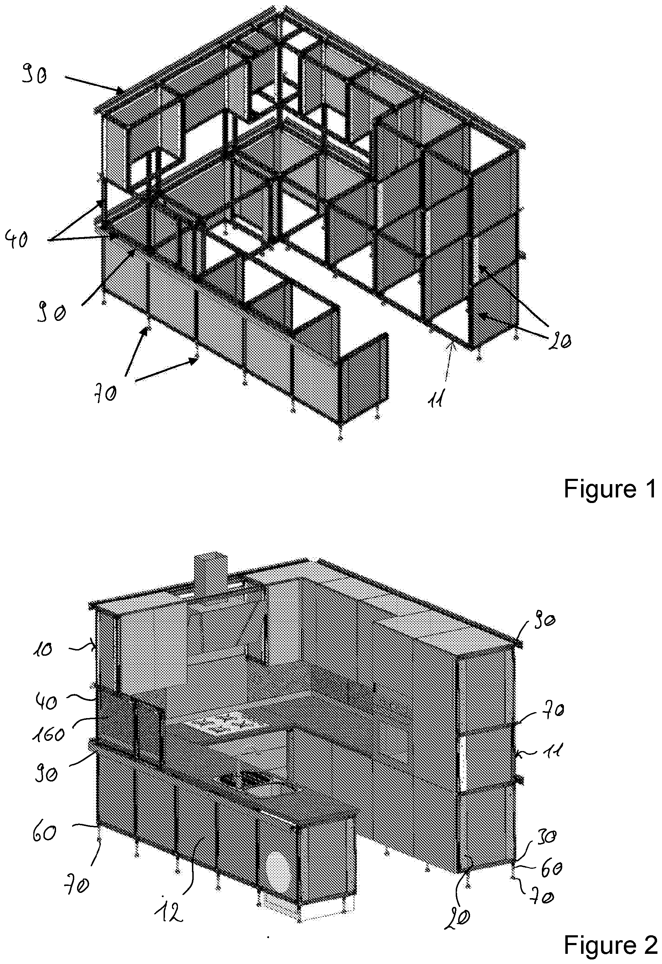

Figure 1 is a view of a part-assembled kitchen assembly constructed from furniture units according to an embodiment of the invention.
Figure 2 shows a constructed kitchen assembly comprising furniture units of the invention.

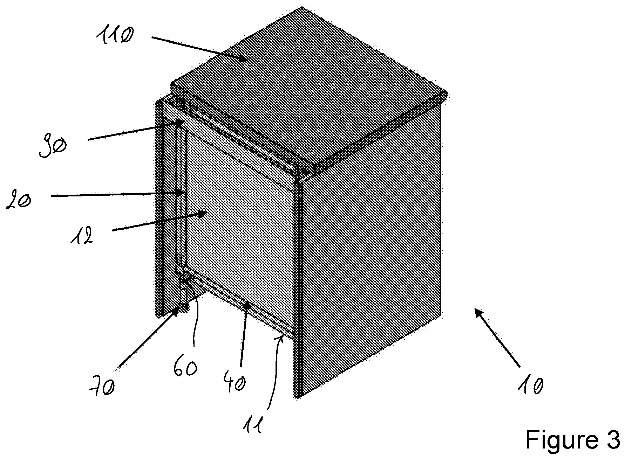

Figure 3 shows a single furniture unit according to the invention.

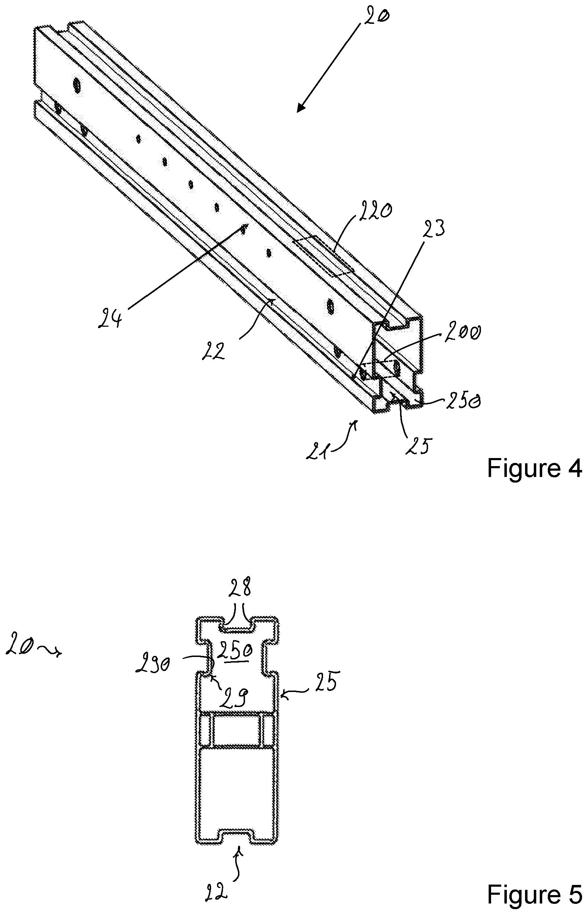

Figure 4 shows an isometric view of a support strut for use in constructing the furniture units of the invention.
Figure 5 is a cross-sectional view of the support strut shown in Figure 4.

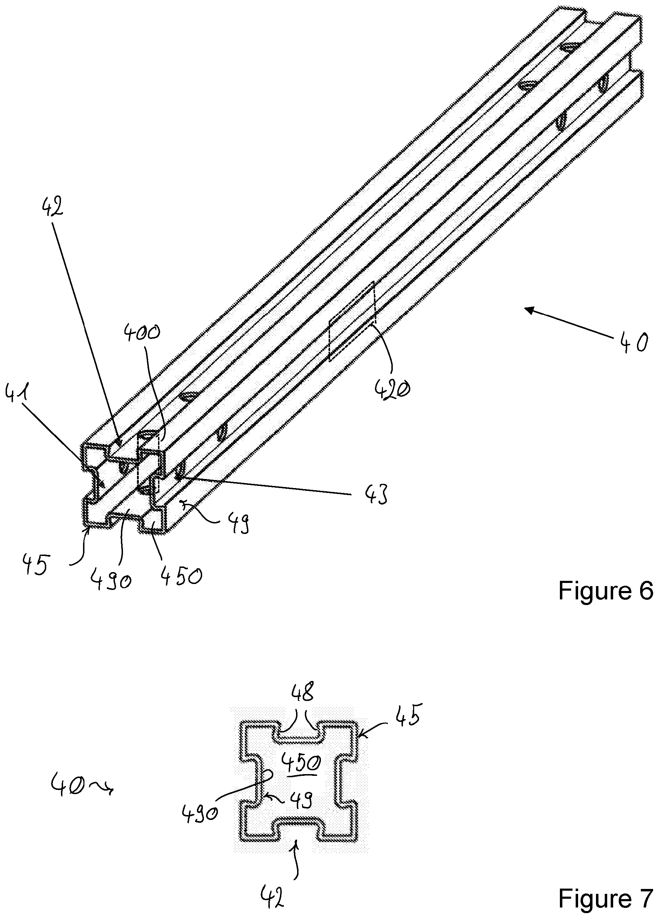

Figure 6 shows an isometric view of a square strut for use in constructing the furniture units of the invention.
Figure 7 is a cross-sectional view of the square strut shown in Figure 6.

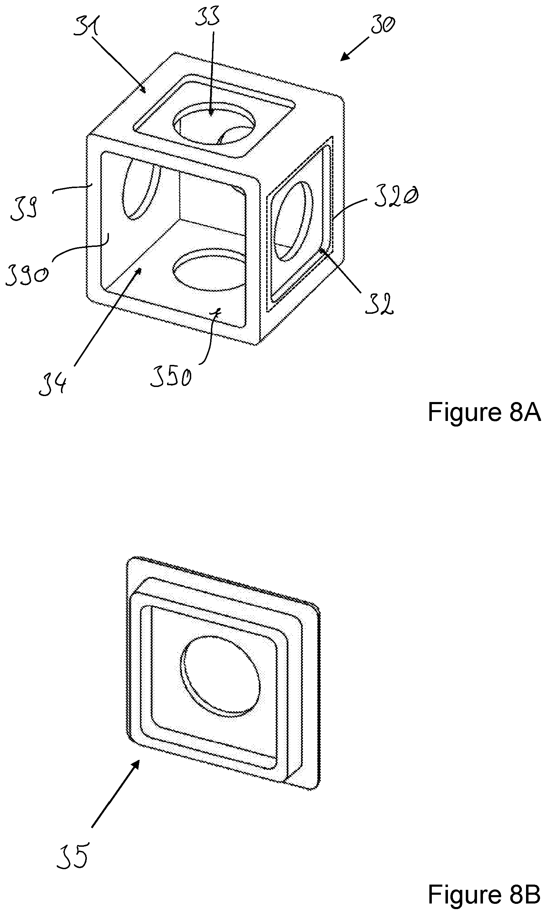

Figure 8A shows a corner piece which serves as the vertex joint component in one example.
Figure 8B shows an end cap for the corner piece shown in Figure 8A.
Figure 9A is an isometric view of a double-ended connector.
Figure 9B is a side view of the double-ended connector shown in Figure 9A.

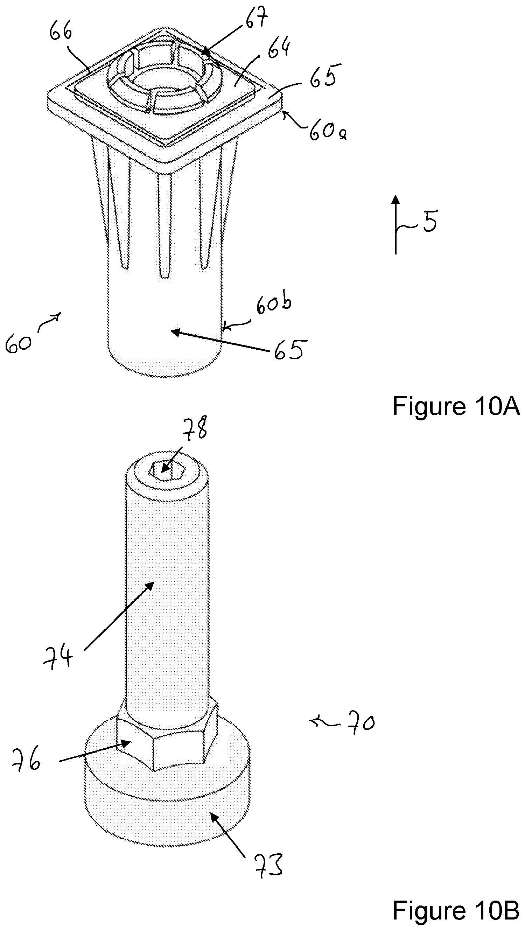

Figures 10A and 10B show isometric views of the upper portion and lower portion of the legs, respectively.

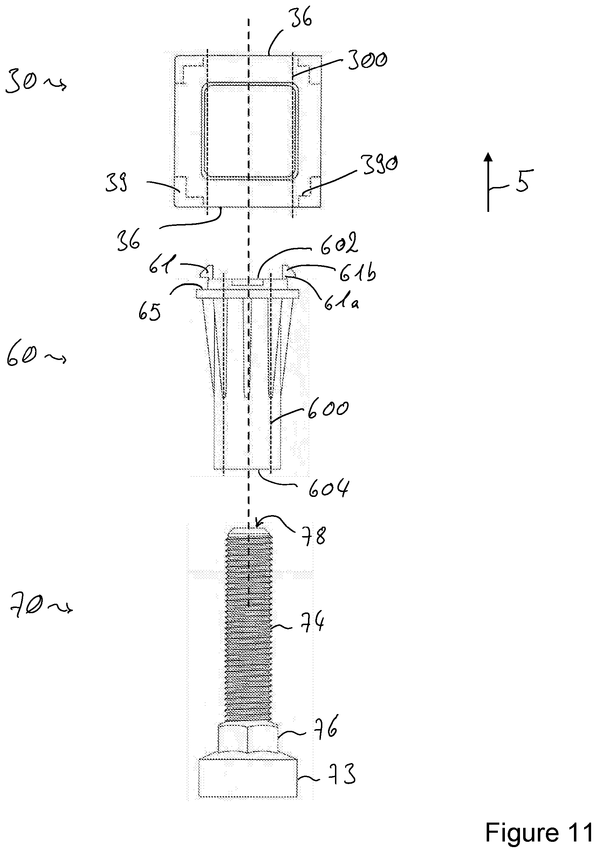

Figure 11 shows an example arrangement of a vertex joint component, an upper portion and a lower portion of the legs.
Figures 12A, 12B and 12C show components of the anchor coupling system for securing the furniture units of to a wall.

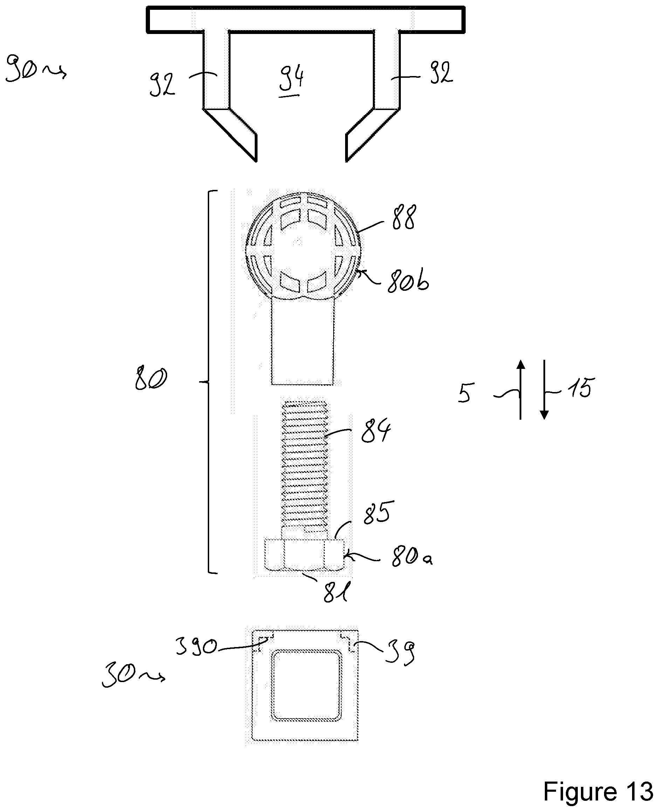

Figure 13 shows an example arrangement of a vertex joint component and the anchor coupling system.

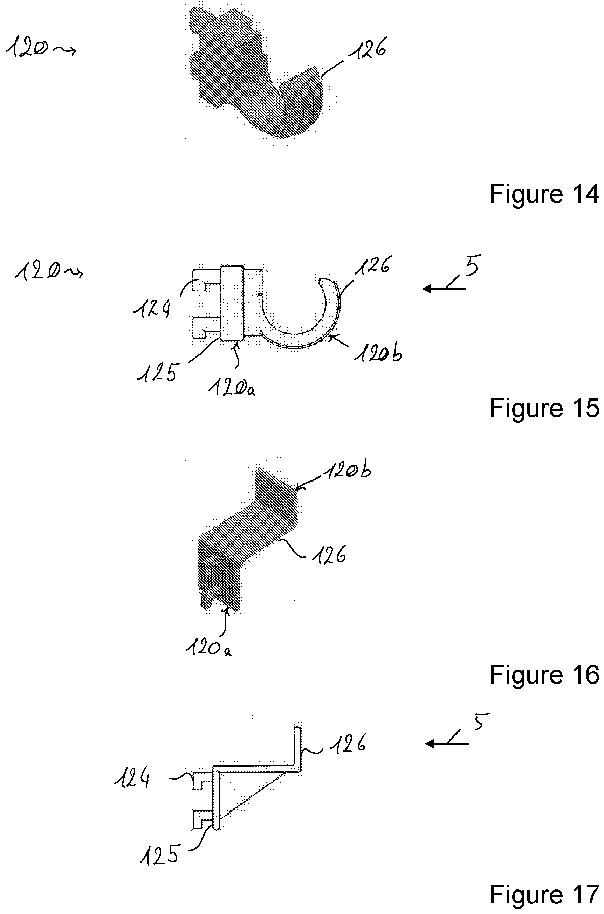

Figure 14 is a perspective view of a pipe connector.
Figure 15 is a side view of the pipe connector shown in Figure 14.
Figure 16 is a perspective view of a cable connector.
Figure 17 is a side view of the cable connector shown in Figure 16.

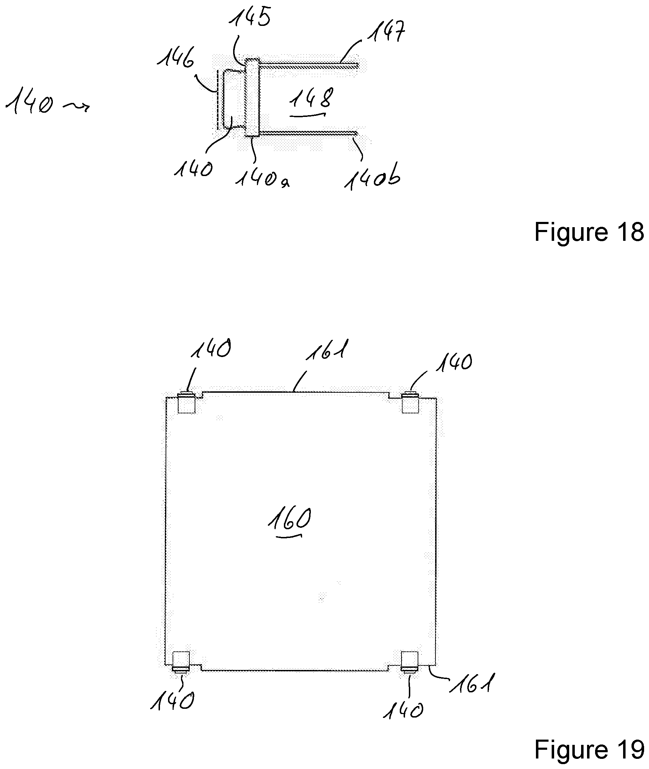

Figure 18 is a cross-sectional view of a connector for securing a removable partition wall.
Figure 19 is a side view of a removable partition wall with four connector for securing the removable wall fitted thereto.

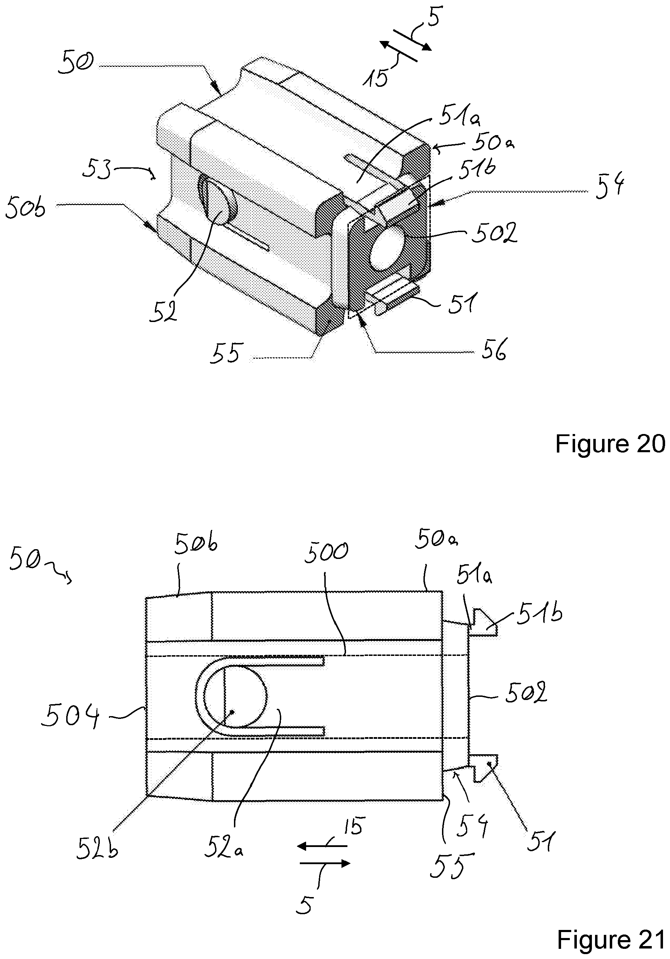

Figure 20 is a perspective view of another example of a double-ended connector.
Figure 21 is a side-view of the double-ended connector shown in Figure 20.

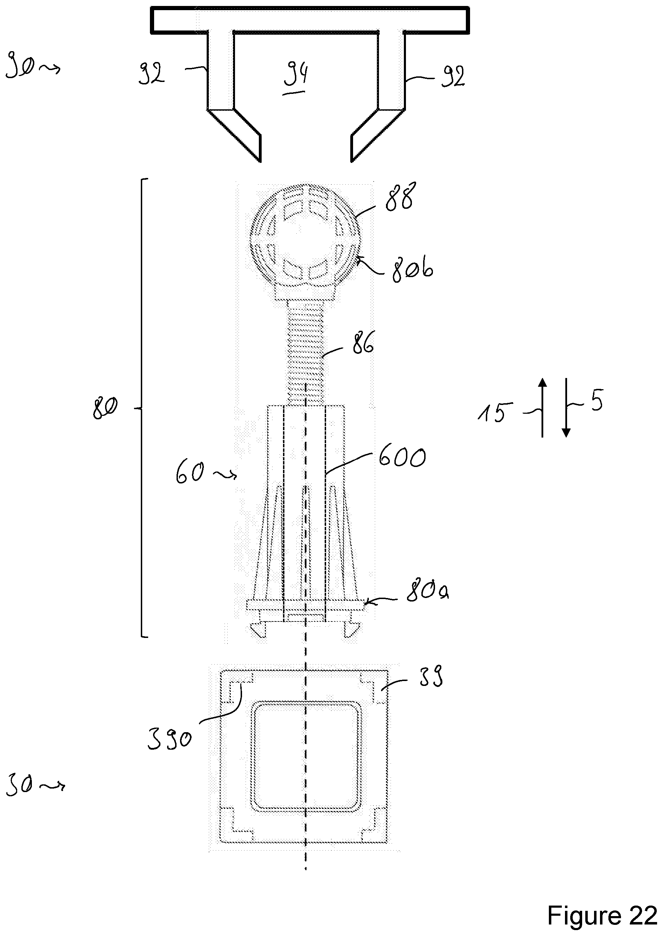

Figure 22 is side view of another example of a wall-anchoring.

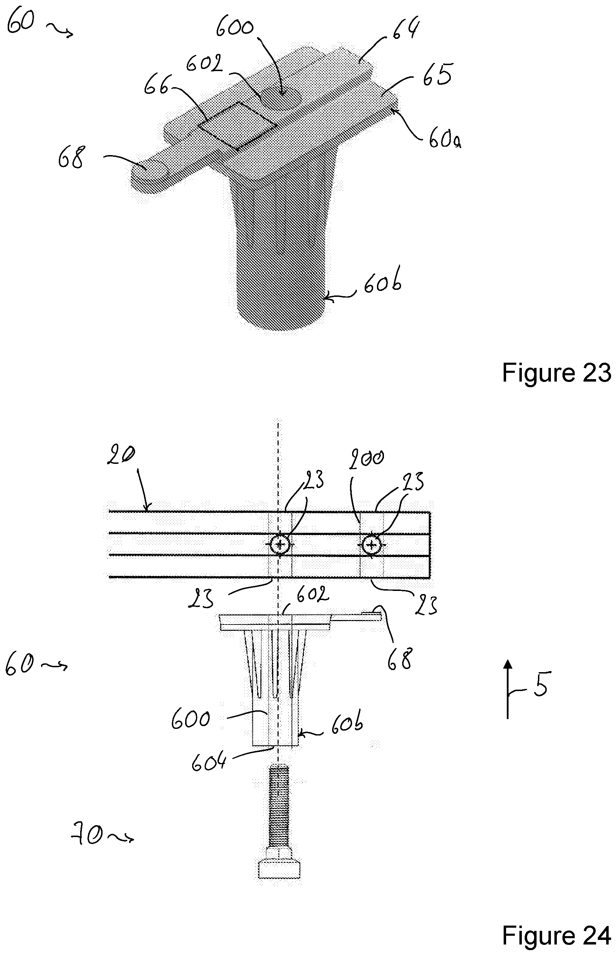

Figure 23 is a perspective view of another example of a leg connector.
Figure 24 is a side view of a leg arrangement including the leg connector shown in Figure 23.

### Detailed Description of the Invention

Figures 1 and 2 show an assembly comprising a plurality of furniture units (10) according to the present disclosure. More particularly, Figure 1 is perspective view of a partially-assembled kitchen while Figure 2 is a fully assembled kitchen made from the units as described herein.

As shown in Figure 3, a single unit (10) is formed from a frame (11) of elongate struts (20, 40) connected by multiple corner pieces (30) and panels (12) held within the frame structure. The corner pieces (30) are also referred to as "vertex joint components" or "hubs", while the panels are also referred to as "partition walls".

The exemplary units (10) comprise connectors for connecting furniture components of the units (10) to each other. The connectors are used to connect components to the frame (11), or to connect components of the frame (11) to each other. The connectors are received by the frame (11) in a first coupling direction (5).

According to the examples discussed below, the connectors are provided as double-ended connectors for connecting struts and corner pieces; as legs for connecting feet to the frame (i.e. to the struts or corner pieces); as a ball-coupling for connecting a wall anchor to the frame; as brackets for connecting utilities to the frame. That is to say, a connector according to the present disclosure enables connection of components of a modular system of furniture units.

Figures 4, 5, 6 and 7 show two examples of different types of struts 20, 40. A strut 20 having a rectangular profile (or 'cross-section') is shown in Figures 4 and 5, while a strut 40 having a substantially square profile is shown in Figures 6 and 7. Figures 4 and 6 show perspective view of the strut 20, 40 shown therein, while Figures 5 and 7 are cross-sectional views showing the profiles of the struts 20, 40.

These struts are used, for example, as both horizontal and vertical struts. The strut 20 of Figures 4 and 5 may be used as a support strut.

The struts have openings (21, 41) at each end to allow the struts to be connected (via a connector) to the corner pieces (30). Suitably, the struts 20, 40 define sockets 25, 45 configured to receive connectors, described below, by means of which the struts and the corner pieces are connected. The connectors are received into a cavity 250, 450 defined inside the struts 20, 40. That is to say, a strut wall 29, 49 defines the cavity 250, 450 within the strut.

The corners of the struts are and have a hollow interior. The struts are formed, for example, by extruding UPVC.

A groove 22, 42 is formed along the strut. The groove 22, 42 is defined between a pair of groove walls 28.

According to the present example, each strut is provided with four grooves. More particularly, a groove is formed in each side face of the strut. These grooves serve as both channels in which panels can be inserted and sockets for connectors, such as double-ended connectors (50) or legs described below.

The groove 22, 42 defines an opening 220, 420 in a side face (or 'surface') of the strut.

The groove narrows towards the surface of the strut, such that a protrusion received into the groove may be engaged and so retained therein. According to the present example, the groove has a dovetail shape.

The struts may also have holes (23, 24, 43). Some of the holes 23, 43 are formed in the grooves 22, 42, while other holes 24 are formed in the side faces of the struts. These holes, particularly those in the side faces, may be used to allow fittings such as drawer runners, shelf supports and door hinges to be fixed to the frame.

The holes are arranged pairwise in opposite sides of the struts, such that a passage 200, 400 extending through the strut 20, 40 is formed. That is to say, the passage extends from one hole to another hole formed in the opposite side.

As shown in Figure 8A, the corner pieces (30) are cubic in structure and take the form of a hollow, cubic casing (31) with one of the faces (34) of the cube being removed. The corner pieces are also formed from UPVC. The five faces of the cube are provided with a square-shaped recess (32) to assist in locating the strut in the correct orientation (with respect to the corner piece) to facilitate a push-fit connection. The five faces of the corner piece are also each provided with an aperture (33) which acts as a socket for receiving an end of the double-ended connector (50). The open face of the cube may also be provided with an end cap (35) (shown in Figure 8B). The end cap (35) may be provided with or without an aperture, depending on whether it is required to connect a strut (20, 40) to the sixth face of the cubic corner piece (30).

Double-ended push-fit connectors (50) are used to connect the struts and the corner pieces. One of the double-ended push-fit connector is shaped to form a push-fit connection with the openings in the ends of the struts whilst the other end is shaped to form a push-fit connection with the corner pieces (30). The struts are typically supplied to the user as a single component with the double-ended push-fit connector inserted into the end of the struts. Therefore, upon assembly only the push-fit connection between the connectors (inserted into the struts) and the corner pieces is required.

An example of a double ended connector (50) is shown in Figures 9A and 9B. A first end of the double-ended connector (50a) is configured to allow for a push-fit connection with apertures (33) in the corner pieces (30), whilst the other end (50b) is configured such that it can be slidably received to fit into the end openings (21, 41) in the struts. The connector also has recesses (53) which are shaped complementarily to the grooves in the struts (22, 42). The connector is also provided with a raised platform (54) which is shaped such that it can engage with the square-shaped recess (32) on the corner piece (30) to ensure that the strut and corner piece are connected to each other in the correct rotational orientation.

The structure of the clip (51) which provides a push-fit connection to the corner pieces (30) can be seen more clearly from the side view in Figure 9B. The clip comprises six curved wall members arranged in a ring. Each wall member is formed of a pliable material (such as a pliable plastics material, e.g. UPVC) and is integrally formed with the rest of the connector. The wall member comprises a lower portion and an upper tapered portion. The maximum width of the tapered portion is greater than the width of the lower portion, such that a "shoulder" is present at the interface between the lower and upper portions. The clip can be inserted into an aperture (33) in the corner piece (30). Due to the pliability of the wall members, the ring arrangement of the wall members its upper tapered portions, as the clip (51) is inserted into the aperture (33), the edges of the aperture deform the wall members inwards towards the centre of the ring (such that the diameter of the ring is reduced so that the clip (31) can fit through the aperture (33)). Once the upper portions of the wall members have passed through the aperture (33) (and the compressing forces from the side walls of the aperture are no longer present) the wall members revert to their original position. Due to the shoulder formed at the interface between the upper and lower portions of the wall member, the connector (50) can then not be simply removed from the strut (20, 40) by pulling the components apart. A tool may be provided to release the connectors (50) from the corner pieces (30).

The connectors also comprise a further clip for providing a push-fit connection between the double-ended connector (50) and a strut (20, 40). This further clip takes the form of a flexible flap (52a) having a protrusion (52b) on its outer surface. It its resting state, the protrusion (52b) prevents the connector (50) from being inserted into an end opening (21, 41) of the struts (20, 40). The protrusion (52b) is biased to stand proud of the surface of the connector. When assembling, the user can press the protrusion (52b) inwards to allow the connector (50) to be inserted into the end openings (21, 41) of the struts. Once the connector (50) has been inserted into the end openings (21, 41) a sufficient distance such that the protrusion (52b) aligns with holes (23, 43) in the struts (20, 40), the flexible flap biases the protrusion into the hole in the strut (23, 43) to lock the connector into the strut (23, 43). Therefore, the connector (50) cannot be removed from the strut (20, 40) without the user depressing the flap (52b) and simultaneously pulling the strut (20, 40) and connector (30) away from each other.

The frame structure is based on an orthorhombic or tetragonal lattice structure, wherein the corner pieces are located on the lattice points. Frame structures of various shapes and sizes can be formed by interconnecting struts of varying lengths with corner pieces.

For each set of 4 connected struts and 4 connected corner pieces that define a rectangle or square, a panel can be located inside the rectangle in the frame structure. The struts also have a continuous groove or channel along substantially all of their length on one or more sides of the strut. For a set of 4 struts that are linked to form a rectangle or square within the frame structure, the grooves or channels are aligned in the frame structure to form a continuous channel around the inside edges of the struts in the frame structure.

During assembly of the furniture unit, a set of 3 struts are connected together using the corner pieces and connections. A panel is then positioned within this continuous channel to compartmentalise the frame structure into separate units. A fourth strut can then be connected to hold the panel within the space defined by the 4 struts.

For a single unit, 8 struts can be connected together using 8 corner pieces to create a cuboid frame (as shown in Figure 3). Within the sides defined by the frame, panels are located to form the faces of the unit. For a single unit, there are 2 side panels, a bottom panel and a rear panel. A front face of the cuboid is left open which is covered by a door or drawers whilst and a top face is left open and is covered by a conventional worktop (110). Hinges for the door or runners for the drawer(s) can be fixed to the side panels.

Multiple units can be constructed from a single frame by connecting more than 3 struts to a comer piece thereby to create a connected frame which defines two or more connected units. If each unit is viewed as cuboidal in shape, each unit is connected to an adjacent unit by virtue of having a shared face.

In this case, a single side panel acts as a side for two adjacent units. Therefore, a single panel may have door hinges, drawer runners and/or shelf supports on each side to support doors, hinges or shelves on two adjacent units.

Figs. 10A and 10B, and Fig. 11 show adjustable legs attachable to the frame. When the unit is to be installed on a sloping or uneven floor surface, the height of the adjustable legs can be altered up or down to ensure that the frame is level.

The adjustable legs are formed from an upper portion (60) and a lower portion (70). The lower portion (70) comprises a base portion (73) with an upstanding threaded shaft (not visible) and an internally threaded sleeve (74). The threaded shaft of the lower portion can be screwed into the threaded sleeve (74) and the height of the legs can thus be adjusted by rotation of these components. A lock nut (69) is also provided which is also threaded onto the upstanding threaded shaft. The top of the sleeve (74) is also provided with a bolt comprises a hexagonal recess (78) to allow the user to rotate the sleeve (74) with respect to the base portion (73) (and thereby alter the height of the feet) using a tool such as a screwdriver. This allows the height of the legs to be adjusted even once the legs have been connected to the corner pieces.

The upper portion (60) comprises a tubular portion (65) in which a shoulder (not visible) is located. The upper portion (60) can therefor receive the lower portion (70) of the foot and the shoulder within the tubular portion (65) sits atop the lower portion to support the upper portion (and the frame/units connected thereto). The upper portion (60) also comprises a push-fit clip, for connecting the foot to a corner piece (30). The clip is of the same construction as the clip on the struts and therefore the feet can be connected to corner pieces (30) within the frame by a simple push-fit connection.

Additionally, the upper portion of the adjustable feet may be provided with a spacer, such that the feet can be connected to the base of the frame at a distance set back from the edge. This allows a kitchen kickboard plinth panel to be fitted to allow the user to stand closer to the unit (i.e. without their toes hitting the front of the unit).

A splashback screen is hingeably connected to the frame at one or more positions.

As the furniture units are typically installed such there is a void in between the rear of the unit and the wall, an anchor coupling system is present to provide support to the top of the furniture unit, without distorting the shape of the frame. The anchor coupling system comprises a slidable ball-and-socket coupling arrangement. The ball-part (84) of the assembly comprises a spherical end (88) connected to a threaded shaft (86). The threaded barrel (86) enables the ball-part (84) to be fixed to the frame by means of a threaded bolt (84). An aluminium anchor rail (91) is attached to the wall (using the screw holes (93)). The anchor rail comprises two curved upstanding walls (92) to define a slot. The slot is dimensioned such that the spherical end (88) of the ball-part can be inserted into the slot at the end of the rail (91) but cannot be pulled out of the gap between the two curved upstanding walls (92). The anchor ball coupling arrangement therefore allows for lateral movement of the ball within the socket (i.e. left to right along the wall) and also pivotal movement (up and down and side-to-side) of the ball within the socket. The variable distance between the unit and the wall can be accounted for by screwing threaded bolt (84) into the threaded barrel (86) to varying extents. The adjustability of the anchor coupling system therefore can provide support to the assembly without exerting forces in directions so as to distort the frame. The geometry of the frame is thus not disturbed. Figures 12A, 12B, 12C and 13 illustrate the anchor coupling system.

The furniture unit can also be provided with a worktop (110). Such worktops are well-known and can be fixed to the frame of the furniture units of the invention using conventional means for installing worktops from the underside face.

The component parts of the assembly are manufactured with a tolerance of 0.2mm to allow for suitably secure push-fit connections to be made between the components.

The components can be provided in a number of colours, materials and finishes to suit the user's aesthetic requirements.

To construct the kitchen unit, a base frame (i.e. a plinth) is first constructed from struts and corner pieces to provide a base. The struts on the plinth are provided with 4 or more adjustable legs on their lower side. The legs are adjusted such that the plinth is level. Once the plinth is level, a datum base structure is formed and further struts can be connected perpendicularly to the plinth. The frame is therefore assembled from the plinth upwards. As the frame is constructed, panels can be placed within the square/rectangular openings defined by 4 struts. Finally, drawer runners, door hinges, shelf supports and other attachments can be fixed to the frame to allow for connection of drawers, doors, shelves and other desired components.

A fully assembled kitchen made from the units of the invention as described herein can be seen from Figure 2. Figure 1 shows a partially assembled kitchen so that the component parts of the furniture units can be more clearly seen.

The invention hence provides a modular, frame-based furniture assembly and methods for constructing a modular, frame-based furniture assembly.

Figure 13 is an exploded view of the wall anchoring of Figures 12A, 12B, 12C.

The connector 80 is provided in two parts. That is to say, the connector 80 comprises a first end 80a and a second end 80b which are provided separately. The first end 80a comprises a first bulbous member 81 and protrusion 84. The protrusion 84 extends from an end face 85 of the first bulbous member 81 in the first coupling direction 5. According to the present example, the protrusion 84 is provided with a threaded segment. More particularly, the first end 80a of the connector 80 is provided as a threaded bolt according to the present example.

The first end 80a and the second end 80b are connected by means of complementary coupling features. Suitably the first end 80a comprises a first threaded segment 84 and the second end comprises a second threaded segment 86, where the first threaded segment 84 and the second threaded segment 86 are complementary. According to the present example, the first end 80a comprises a threaded protrusion 84 and the second end 80b comprises a threaded recess 86 into which the probe 84 is received. The threaded protrusion 84 is received into the threaded recess 86 in the first coupling direction 5.

The first end 80a and the second end 80b are adjustably coupled such that a length of the connector 80 is adjustable between a first length and a second length, where the first length is different from the second length. By suitably rotating the first end 80a relative to the second end 80b, the threaded protrusion 84 is moved in the threaded recess 86 to adjust the distance between the first end 80a and the second end 80b of the connector 80.

in use, the connector 80 prevents the furniture unit and a structural wall or other support feature from separating. In particular, the connector 80 resists the furniture unit being displaced in the first coupling direction 5, i.e. away from the wall or other support feature.

An alternative vertex joint component 30 is depicted in Figure 13, wherein the sockets 35 of the vertex joint component 30 define openings 33 corresponding to the sockets 35. That is to say, the square sockets 35 of this example define square openings 320 connecting to a cavity 350 inside the vertex joint component 30, whereas according to the example of Figures 8A, 8B round openings 33 are formed.

The first end 80a is coupled to the vertex joint component 30. According to the present example, the first end 80a is slotted into the vertex joint component 30, for example through the removed face, in the first coupling direction 5. The protrusion 84 is inserted into one of the sockets 32 in the first coupling direction 5, such that the protrusion extends from the vertex joint component 30.

A cavity 350 delimited by an internal surface 390 of a wall 39 of the vertex joint component 30 is configured to receive the first bulbous member 81. The wall 39 is configured to capture the first bulbous member 81 and, thus, prevent the first end 80a from being pulled from the openings 32 of the vertex joint component 30. That is to say, the first bulbous member 81 is located against the internal surface 390 of the wall 39.

The second end 80b is coupled to the wall anchor 90. In particular, the wall anchor 90 comprises a pair of rails 92 defining an open-ended channel 94 therebetween. The channel 94 is configured to receive a second bulbous member 88 of the second end 80b of the connector 80, which may be slotted into the channel 94 through one of the open ends.

The rails 92 are configured to capture the bulbous member 88 located within the channel 94. in particular, the rails 92 prevent the bulbous member 88 from being pulled from the channel 94.

With the first bulbous member 81 captured by the vertex joint component 30 and the second bulbous member 88 captured by the wall anchor 90, the connector 80 coupled the vertex joint component 30 and the anchor 90. This connection is articulated at both ends, such that rotation of the connector 80 about the vertex joint component 30 and about the wall anchor 90 is possible.

Figures 14 and 15 show a pipe connector 120. More particularly, Figure 14 is a perspective view of the pipe connector 120 while Figure 15 is a side view of the pipe connector 120.

The pipe connector 120 comprises a first end 120a and a second end 120b. A protrusion 124 extends from an end face 125 of the first end 120a in the first coupling direction 5. The protrusion 124 is configured to engage an aperture 23, 24, 43 of the frame 11, and so couple the connector 120 to the frame 11.

The pipe connector 120 comprises a bracket 126. The bracket 126 is attachable to a pipe, for example a pipe for conveying water or gas, and to retain said pipe and so, in use, couple said pipe to the furniture unit 10
Figure 16 and 17 show a cable connector 120. The cable connector 120 is similar to the pipe connector 120, so a detailed description is omitted. The cable connector 120 differs from the pipe connector 120 in that the bracket 126 of the cable connector 120 comprises a straight shelf portion with an upstanding end portion, rather than a curved bracket.

Figures 18 and 19 show a partition wall connector 140 and a removable partition wall 160. The partition wall 160 may be any wall of the furniture unit, defining a front surface or a side surface or a rear surface. For example, the removable partition wall 160 may be a rear panel behind which a structural wall and utilities are located.

The partition wall connector 140 is configured to secure the removable partition wall 160 in one of the openings defined by the frame 11. In particular, the removable partition wall 160 comprises an edge 161 which is locatable in one of the grooves 22, 42. The partition wall connector 140 is also located in a groove 22, 42. The connector 140 may be located in the same or an adjacent groove, or in a groove on the opposite side of the opening in order to secure the removable partition wall 160. Suitably, the removable partition wall 160 may be sized such that the connector 140 and the partition wall 160 fit into the opening.

The partition wall connector 140 comprises a first end 140a and a second end 140b. The first end 140a comprises a protrusion 144 which extends in the first coupling direction 5 from an end face 145. The protrusion 144 defines a substantially rectangular perimeter 146 which is locatable in the groove 22, 42 such that the groove 22, 42 captures the protrusion 144.

The second end 140b of the connector 140 comprises a pair of walls 147 between which a recess 148 is defined. The recess is configured to receive the first edge 161 of the removable partition wall 160.

Figures 20 and 21 show another example of a double-ended connector 50. Figure 20 is a perspective view of the connector 50, while Figure 21 is a side view of the connector 50.

The connector 50 comprises a first end 50a and, opposite thereto, a second end 50b.

The first end 50a comprises a protrusion 54 extending in the first coupling direction 5 from an end face 55. The protrusion 54 defines a substantially rectangular perimeter 56.

The first end 50a comprises a pair of clips 51 extending in the first coupling direction 5. The clips 51 are formed on opposite sides of the connector 50, which each clip extending through a portion of the recess 53 and a cutaway portion of the protrusion 54. A flexible member 51a of the first clip 51 extends in the recess 53, while a hook 51b is located in front of the protrusion, with reference to the first coupling direction 5.

The second end 50b of the connector 50 is tapered. That is to say, the second end 50b of the connector 50 is narrower or smaller than the first end 50a, or a section between the first end 50a and the second end 50b. According to the present example, the second end 50b is tapered linearly, i.e. sides of the second end 50b are straight but angled such that the second end 50b is tapered in the second coupling direction 15.

As shown in Figure 21, the connector 50 defines a passage 500 extending therethrough. The passage 500 extends from the first end 50a to the second end 50b. In particular, the passage 500 extends between a first aperture 502 formed in the protrusion 54, and a second aperture 504 formed in the second end 50b. A corresponding passage can be formed in the connector 50 of Figures 8A and 8B, although not shown.

According to some examples, at least a segment of the passage 500 is threaded in order to receive a probe having complementary threading.

Figure 22 shows another example of a wall anchoring similar to that of Figures 12A, B, C and 13.

The exemplary wall anchoring according to Figure 22 comprises a vertex joint component 30 and a wall anchor 90, which correspond to those of Figure 13. The vertex joint component 30 and the wall anchor 90 are coupled by means of an anchor connector 80 which is similar to the anchor connector 80 of Figures 12 and 13.

The anchor connector 80 of Figure 22 differs, however, in that the first end 80a of the connector 80 corresponds to the leg 60 shown in Figure 11. Suitably the second end 80b of the anchor connector 80 is provided with a threaded segment 86 which is complementary to the threaded segment of the passage 600 extending through leg 60. That is to say, the second end 80b comprises a threaded probe 86 which is received into the threaded passage 600 of the leg 60. The threaded probe 86 is received into the passage 600 in the first coupling direction 5.

The anchor connector 80 is connected to the wall anchor 90 as described earlier with respect to Figure 13. That is to say, the bulbous member 88 is slotted into the channel 94 through one of the open ends of the channel 94, and captured therein by the walls 92 of the wall anchor 90.

According to Figure 22, the anchor connector 80 is connected to the vertex joint component 30 in the first coupling direction 5. More particularly, the first end 80a of the anchor connector, which corresponds to the first end 60a of the leg 60, is inserted into a corresponding socket of the vertex joint component 30. The optional clips 61 provided on the leg 60 secure the vertex joint component 30 and the leg 60 together.

Figures 23 and 24 show another example of a leg 60. In particular, Figure 23 is a perspective view of the leg 60, while Figure 24 shows an exemplary arrangement of the leg 60, a strut 20 and a foot 70.

The leg 60 is similar to that of Figures 10A, 11 and 22. The leg of Figures 23 and 24 differs from those legs described with respect to earlier Figures, however, in that a different engagement feature is provided by means of which the leg 60 is connected to the frame 11. While the legs described earlier are configured to connect to the vertex joint component 30, the leg 60 shown in Figures 23 and 24 is configured to connect to the struts 20, 40.

The leg 60 comprises a protrusion 64 extending from an end face 65 of the leg 60. The protrusion is shaped complementary to the grooves 22, 42 of the struts 22, 42. According to the present example, the protrusion 64 defines a generally rectangular perimeter 66 and is therefore insertible into the grooves in two configurations (or orientations with respect to the struts). That is to say, the protrusion 64 is aligned with the groove in order to fit into the groove.

According to the present example, the grooves define recesses of dovetail shape, and the protrusion is slotted into said grooves and captured therein.

The leg 60 defines a passage 600 extending through the leg 60. The passage 600 extends from a first opening 602, on one side of the leg 60, to a second opening 604, on the other side of the leg 60. in particular, the first opening 602 is formed in the first end 60a, while the second opening 604 is formed in the second end 60b. According to the present example, the first opening 602 is formed in the protrusion 64.

The foot 70 is received into the passage 600 in the first coupling direction 5. In particular, the threaded probe of the leg 70 is received through the opening 604 in the second end 60b of the leg 70. The foot 70 is thus inserted into a threaded segment of the passage 600, and so coupled to the leg 60.

A secondary protrusion 68 extends from the protrusion 64. The secondary protrusion 68 is configured to engage with a secondary aperture. According to the present example, the secondary aperture is provided as, and corresponds to, one of the aperture 23, 43 of the struts. That is to say, when the leg 60 is fitted to the strut 20, 40, the protrusion 64 is insertible into the groove, and the secondary protrusion 68 is insertible into the aperture 23, 43 (also referred to as a secondary aperture).

The secondary protrusion 68 is spaced from the first opening 602 of the passage 600 extending through the leg 60 by a distance corresponding to the distance between a pair of apertures 23, 43 of the struts. Accordingly, by locating the secondary protrusion 68 in the secondary aperture 23, i.e. in one aperture of the pair of apertures, the other aperture 23 of the pair is aligned with the first opening 602. Thus the passage 600 extending through the leg 60 and a passage 200 extending through the strut are aligned.

Receiving the protrusion of the connector into the opening of the first socket of the frame locates the connector relative to the frame. In particular, by providing a protrusion defining a non-circular perimeter and a corresponding first socket, the protrusion is insertible into the opening of the first socket at discrete orientations.

By configuring the connector and the frame such that the end face of the connector abuts against the frame upon insertion of the connector into the socket, the connector is located and further insertion prevented. Thus the end face may define a load bearing surface of the connector.

The first clip catches on the walls delimiting an internal cavity inside the frame and so prevents the connector from detaching from the frame. At the same time, the connector remains detachable from the frame by flexing the first clip so as to release the frame from the hold of the first clip.

Similar to the first clip, the second clip includes a hook that catches on a wall of the strut to secure the connector to the strut. At the same time, the connector remains detachable from the strut by flexing the second clip so as to release the frame from the hold of the second clip. Access to the second clip is provided through the aperture in which second clip is located. As the aperture extends to the outer surface of the strut, the second clip can be flexed to release the strut.

The legs of the furniture unit are adjustable by means of a tool inserted through the frame and the connector. That is to say, the tool is slotted through passages extending through the frame and the connector to engage with the leg. Suitably this allows adjusting the length of the leg even without direct access to the leg. Since the furniture unit may be assembled from the ground up, certain legs may be located in locations difficult to access. Particularly with reference to legs situated at a wall or a corner, access may thus be improved by utilising passages extending through the frame and the connector.

The secondary protrusion of the connector is a locating feature that may assist in aligning the passage through the frame with the passage through the connector, by locating the secondary protrusion in the secondary opening of the frame. Particularly where the connector is configured to attach the groove, which provides an elongate socket, correct alignment may otherwise be difficult to achieve.

The furniture unit is anchored by means of an articulated connection. That is to say, the bulbous member of the connector is captured in a wall anchor and so provides for an articulated connection (or 'ball coupling') which is independent of the exact alignment of the furniture unit and the structural wall to which the furniture unit is anchored. Since buildings are known to have inclined, sagged or otherwise deformed walls, it is thus ensured that the furniture unit is anchored without being tilted as a result of a deformed wall.

Providing a length-adjustable connector between the frame and the wall anchor may improve the anchoring. In particular, anchoring of the furniture unit may be improved to accommodate for various gap sizes between the wall anchor and the frame.

The bulbous member provided at the first end of the connector may further improve the connection between the frame and the wall anchor. In particular, the connector thus makes an articulated connection with the wall anchor and with the frame. As a result, anchoring of the furniture unit may be improved where there is a height offset between the frame and the wall anchor.

In certain known furniture units, particularly with reference to kitchen units, utilities such as gas or water or electricity may be provided inside structural walls or between the structural wall and the furniture unit. In either case, the utilities may be in an unknown location and, in any event, difficult to access. By providing a connector configured to carry the utilities, for example behind a splashback panel, ease of access may be ensured. This may be the case particularly where the partition wall is configured to be removable without requiring additional disassembly.

By means of a suitable connector, a removable partition wall may be secured to the frame. Particularly where access to a space covered by the removable partition wall is desirable, for example in case utilities are carried in that space, a removable partition wall may be preferred. By providing and levelling a plurality of datum legs it is not necessary to level all legs on which the kitchen is carried. That is to say, fitting of the kitchen is started by levelling a subset of legs and subsequently adding further legs. Moreover, the frame which is located on the datum legs and to which the secondary feet are added will be level as a result of the datum legs being levelled. Thus individual units need not be levelled separately.

In summary, exemplary embodiments of a furniture unit and have been described. The described exemplary embodiments provide for an improved apparatus. Additionally, the described exemplary embodiments are convenient to manufacture and straightforward to use. An industrial application of the example embodiments will be clear from the discussion herein.

Although preferred embodiment(s) of the present invention have been shown and described, it will be appreciated by those skilled in the art that changes may be made without departing from the scope of the invention as defined in the claims.

## Claims

1. A furniture unit (10), comprising:
a frame (11) formed of a plurality of struts (20, 40) connected by a plurality of vertex joint components (30),
wherein the struts (20, 40) define a number of openings within which partition walls (12, 160) are locatable;
a connector (50, 60, 80, 120, 140) attachable to the frame (11) in a first coupling direction (5), the connector comprising:
a first end (50a, 60a, 80a, 120a, 140a) and, opposite thereto, a second end (50b, 60b, 80b, 120b, 140b);
wherein the first end of the connector comprises an end face (55, 65, 85, 125, 145) and a protrusion (54, 64, 84, 124, 144) extending from the end face in the first coupling direction (5); and
the frame (11) further comprising a first socket (22, 25, 32, 42, 45) configured to receive the protrusion of the first end of the connector in the first coupling direction (5);
wherein the second end (80b) of the connector (80) further comprises a bulbous member (88);
the furniture unit (10) further comprising a wall anchor (90) to capture the bulbous member (88) to provide an articulated connection, the wall anchor (90) comprising a pair of rails (92) extending substantially parallel and an open-ended channel (94) defined between the rails (92);
wherein the bulbous member (88) is insertible into the channel (94) and the rails (92) are configured to capture the bulbous member (88) within the channel (94).

2. The furniture unit (10) according to claim 1, wherein
the protrusion (54, 64, 144) has a cross-sectional shape defining a rectangular perimeter (56, 66, 146),
and the first socket (22, 32, 42) of the frame (11) defines an opening (21, 31, 41, 220, 320, 420) corresponding to the rectangular perimeter of the protrusion to locate the protrusion at predetermined orientations with respect to the first socket; and
wherein the protrusion of the connector is insertible into the opening of the first socket to cause the end face (55, 65, 145) of the first end (50a, 60a, 140a) of the connector to abut against the frame (11) and restrict further insertion.

3. The furniture unit (10) according to claim 2,
the vertex joint component (30) further comprising a cavity (350) delimited by an internal surface (390) of a wall (39) of the vertex joint component (30),
wherein the opening (31) of the first socket (32) extends through the wall (39) to the internal surface (390);
the first end (50a, 60a) of the connector further comprising a first clip (51, 61) for securing the connector to the vertex joint component (30),
wherein the first clip (51, 61) comprises a flexible member (51a, 61a) extending in the first coupling direction (5) and a hook (51b, 61b) extending from the flexible member (51a, 61a);
wherein the first end (50a, 60a) of the connector is insertible into the first socket (32) to locate the first clip (51, 61) in the cavity (350) and cause the hook (51b, 61b) to catch the wall (39) of the vertex joint component (30).

4. The furniture unit (10) according to any preceding claim,
wherein the first socket (22, 42) is provided as a groove (22, 42) extending along the frame, and wherein:
the groove (22, 42) is delimited between a pair of groove walls (28) defining a dovetail shape,and
the groove walls (28, 48) are configured to capture the protrusion (64, 144) of the connector (60, 140).

5. The furniture unit (10) according to any one of claims 2 to 4,
the connector (50, 60) forming a first passage (500, 600) extending between a first opening (502, 602) in the first end (50a, 60a) of the connector and a second opening (504, 604) in the second end (50b, 60b) of the connector,
the frame (11) forming a second passage (200, 300, 400) extending from a first aperture (23, 33, 43) to a second aperture (23, 33, 43) formed in the opposite side of the frame (11), wherein the first passage (500, 600) and the second passage (200, 300, 400) extend in the first coupling direction (5);
the furniture unit (10) further comprising a leg (70) comprising:
a foot end (73) and a threaded end (74),
the threaded end (74) insertible into a tapped section of the first passage (500, 600)
extending through the connector (50, 60);
wherein the leg (70) is configured to engage with a tool insertible through the second passage (200, 300, 400) and the first passage (500, 600) to rotate the leg (70) in the tapped section of the first passage (500, 600) between a first configuration and a second configuration, the distance between the connector (50, 60) and the foot end (73) of the leg (70) being different in the first configuration and the second configuration.

6. The furniture unit (10) according to claim 5,
the connector (60) further comprising a secondary protrusion (68) extending from the first end (60a) of the connector in the first coupling direction (5),
wherein a strut (20, 40) of the plurality of struts (20, 40) defines a secondary aperture (23, 43) configured to receive the secondary protrusion (68) of the connector (60),
wherein the secondary protrusion (68) and the first passage (500, 600) of the connector are separated by a distance corresponding to the distance between the secondary aperture (23, 43) and the second passage (200, 300, 400) so that the secondary protrusion (68) is locatable in the secondary aperture (23, 43) to align the first passage (500, 600) and the second passage (200, 300, 400).

7. The furniture unit (10) according to any preceding claim,
wherein the first end (80a) of the connector (80) comprises a first threaded segment (84) extending in the first coupling direction (5) and the second end (80b) of the connector (80) comprises a second threaded segment (86) in the first coupling direction (5), the first threaded segment (84) being complementary to the second threaded segment (86),
wherein the first end (80a) of the connector (80) is rotatable relative to the second end (80b) of the connector (80) to adjust the distance between the first end (80a) and the bulbous member (86) of the second end.

8. The furniture unit (10) according to any preceding claim,
wherein the first end (80a) of the connector (80) comprises another bulbous member (81),
wherein the bulbous member (81) of the first end (80a) is captured in the first socket (32) of the frame (11).

9. The furniture unit (10) according to any preceding claim,
wherein the second end (120b) of the connector (120) comprises a bracket (126) configured to capture a pipe or cabling.

10. The furniture unit (10) according to claim 4,
the furniture unit (10) further comprising a removable partition wall (160),
wherein a first edge (161) of the removable partition wall (160) is locatable in the groove (22, 42) extending along the frame (11); and
wherein the second end (140b) of the connector (140) comprises a pair of walls (147) between which a recess (148) is defined, the recess (148) configured to receive the first edge (161) of the removable partition wall (160).

11. The furniture unit according to claim 1 wherein the struts and vertex joint components are provided with complementary formations that allow for a push-fit connection of the struts and vertex joint components.

12. The furniture unit according to claim 1, wherein each vertex joint component is a hollow cube provided with an aperture in each face of the hollow cube; and the furniture unit comprising a vertically adjustable support member fitted to a vertex joint component of the plurality of vertex joint components; the support member comprising: an upper element and a lower element, the upper element and the lower element provided with complementary screw-threads, and wherein the lower element defines a formation configured to receive a tool, the formation accessible through the upper element and said vertex joint component of the plurality of vertex joint components.

13. The furniture unit according to any preceding claim, wherein the struts and/or vertex joint components are made from a plastics material, such as UPVC.

14. A kit of parts for constructing a furniture unit according to any preceding claims, comprising:
a plurality of struts (20, 40) connectable by a plurality of vertex joint components (30) for forming a frame (11), and one or more partition walls;
wherein the struts (20, 40) define a number of openings within which the one or more partition walls (12, 160) are locatable;
a connector (50, 60, 80, 120, 140) attachable to the frame (11) in a first coupling direction (5), the connector comprising:
a first end (50a, 60a, 80a, 120a, 140a) and, opposite thereto, a second end (50b, 60b, 80b, 120b, 140b);
wherein the first end of the connector comprises an end face (55, 65, 85, 125, 145) and a protrusion (54, 64, 84, 124, 144) extending from the end face in the first coupling direction (5); and
the frame (11) comprising a first socket (22, 25, 32, 42, 45) configured to receive the protrusion of the first end of the connector in the first coupling direction (5);
wherein the second end (80b) of the connector (80) further comprises a bulbous member (88);
the kit of parts further comprising a wall anchor (90) to capture the bulbous member (88) to provide an articulated connection, the wall anchor (90) comprising a pair of rails (92) extending substantially parallel and an open-ended channel (94) defined between the rails (92);
wherein the bulbous member (88) is insertable into the channel (94) and the rails (92) are configured to capture the bulbous member (88) within the channel (94).

## Patentansprüche

1. Möbeleinheit (10), die Folgendes umfasst:
einen Rahmen (11), der aus einer Vielzahl von Stützen (20, 40) ausgebildet ist, die durch eine Vielzahl von Eckverbindungspunktkomponenten (30) miteinander verbunden sind,
wobei die Stützen (20, 40) eine Anzahl von Öffnungen definieren, in der Trennwände (12, 160) anordenbar sind;
ein Verbindungselement (50, 60, 80, 120, 140), das auf dem Rahmen (11) in einer ersten Kopplungsrichtung (5) befestigbar ist, wobei das Verbindungselement Folgendes umfasst:
ein erstes Ende (50a, 60a, 80a, 120a, 140a) und ein entgegengesetztes zweites Ende (50b, 60b, 80b, 120b, 140b);
wobei das erste Ende des Verbindungselements eine Endfläche (55, 65, 85, 125, 145) und einen Vorsprung (54, 64, 84, 124, 144) umfasst, der sich von der Endfläche in die erste Kopplungsrichtung (5) erstreckt; und
wobei der Rahmen (11) ferner eine erste Aufnahme (22, 25, 32, 42, 45) umfasst, die dazu ausgelegt ist, den Vorsprung des ersten Endes des Verbindungselements in der ersten Kopplungsrichtung (5) aufzunehmen;
wobei das zweite Ende (80b) des Verbindungselements (80) ferner ein kugelförmiges Element (88) umfasst;
wobei die Möbeleinheit (10) ferner einen Wandanker (90) umfasst, um das kugelförmige Element (88) aufzunehmen, um eine Gelenkverbindung bereitzustellen, wobei der Wandanker (90) ein Paar von Schienen (92), die sich im Wesentlichen parallel erstrecken, und einen zwischen den Schienen (92) definierten offenendigen Kanal (94) umfasst;
wobei das kugelförmige Element (88) in den Kanal (94) einbringbar ist und die Schienen (92) dazu ausgelegt sind, das kugelförmige Element (88) innerhalb des Kanals (94) aufzunehmen.

2. Möbeleinheit (10) nach Anspruch 1, wobei
der Vorsprung (54, 64, 144) eine Querschnittsform aufweist, die einen rechteckigen Umfang (56, 66, 146) definiert,
und die erste Aufnahme (22, 32, 42) des Rahmens (11) eine Öffnung (21, 31, 41, 220, 320, 420) definiert, die dem rechteckigen Umfang des Vorsprungs entspricht, um den Vorsprung in vorbestimmten Ausrichtungen in Bezug auf die erste Aufnahme anzuordnen; und
wobei der Vorsprung des Verbindungselements in die Öffnung der ersten Aufnahme einbringbar ist, um zu bewirken, dass die Endfläche (55, 65, 145) des ersten Endes (50a, 60a, 140a) des Verbinders am Rahmen (11) anliegt und weiteres Einbringen verhindert.

3. Möbeleinheit (10) nach Anspruch 2,
wobei die Eckverbindungspunktkomponente (30) ferner einen Hohlraum (350) umfasst, der durch eine Innenfläche (390) einer Wand (39) der Eckverbindungspunktkomponente (30) begrenzt ist,
wobei sich die Öffnung (31) der ersten Aufnahme (32) durch die Wand (39) hindurch zur Innenfläche (390) erstreckt;
wobei das erste Ende (50a, 60a) des Verbindungselements ferner ein erstes Klemmelement (51, 61) zum Befestigen des Verbindungselements an der Eckverbindungspunktkomponente (30) umfasst,
wobei das erste Klemmelement (51, 61) ein biegsames Element (51a, 61a), das sich in die erste Kopplungsrichtung (5) erstreckt, und einen Haken (51b, 61b), der sich vom biegsamen Element (51a, 61a) wegerstreckt, umfasst;
wobei das erste Ende (50a, 60a) des Verbindungselements in die erste Aufnahme (32) einbringbar ist, um das erste Klemmelement (51, 61) im Hohlraum (350) anzuordnen und zu bewirken, dass der Haken (51b, 61b) mit der Wand (39) der Eckverbindungspunktkomponente einrastet.

4. Möbeleinheit (10) nach einem der vorangegangenen Ansprüche,
wobei die erste Aufnahme (22, 42) als Nut (22, 42) bereitgestellt ist, die sich entlang des Rahmens erstreckt, und wobei:
die Nut (22, 42) zwischen einem Paar von Nutwänden (28) begrenzt ist, die eine Schwalbenschwanzform definieren, und
die Nutwände (28, 48) dazu ausgelegt sind, den Vorsprung (64, 144) des Verbindungselements (60, 140) aufzunehmen.

5. Möbeleinheit (10) nach einem der Ansprüche 2 bis 4,
wobei das Verbindungselement (50, 60) einen ersten Durchgang (500, 600) ausbildet, der sich zwischen einer ersten Öffnung (502, 602) im ersten Ende (50a, 60a) des Verbindungselements und einer zweiten Öffnung (504, 604) im zweiten Ende (50b, 60b) des Verbindungselements erstreckt,
wobei der Rahmen (11) einen zweiten Durchgang (200, 300, 400) ausbildet, der sich von einer ersten Öffnung (23, 33, 43) zu einer im entgegengesetzten Ende des Rahmens (11) ausgebildeten zweiten Öffnung (23, 33, 43) erstreckt,
wobei der erste Durchgang (500, 600) und der zweite Durchgang (200, 300, 400) sich in die erste Kopplungsrichtung (5) erstrecken;
wobei die Möbeleinheit (10) ferner einen Schenkel (70) umfasst, das Folgendes umfasst:
ein Fußende (73) und ein Gewinde-Ende (74),
wobei das Gewinde-Ende (74) in einen Innengewinde-Abschnitt des ersten Durchgangs (500, 600), der sich durch das Verbindungselement (50, 60) hindurch erstreckt, einbringbar ist;
wobei der Schenkel (70) dazu ausgelegt ist, mit einem Werkzeug in Eingriff zu gelangen, das durch den zweiten Durchgang (200, 300, 400) und den ersten Durchgang (500, 600) hindurch einbringbar ist, um den Schenkel (70) in den Innengewinde-Abschnitt des ersten Durchgangs (500, 600) zwischen einer ersten Konfiguration und einer zweiten Konfiguration zu drehen, wobei der Abstand zwischen dem Verbindungselement (50, 60) und dem Schenkelende (73) des Schenkels (70) in der ersten Konfiguration bzw. der zweiten Konfiguration unterschiedlich ist.

6. Möbeleinheit (10) nach Anspruch 5,
wobei das Verbindungselement (60) ferner einen sekundären Vorsprung (68) umfasst, der sich vom ersten Ende (60a) des Verbindungselements in die erste Kopplungsrichtung (5) erstreckt,
wobei eine Stütze (20, 40) aus der Vielzahl von Stützen (20, 40) eine sekundäre Öffnung (23, 43) definiert, die dazu ausgelegt ist, den sekundären Vorsprung (68) des Verbindungselements (60) aufzunehmen,
wobei der sekundäre Vorsprung (68) und der erste Durchgang (500, 600) des Verbindungselements durch einen Abstand getrennt sind, der dem Abstand zwischen der sekundären Öffnung (23, 43) und dem zweiten Durchgang (200, 300, 400) entspricht, so dass der sekundäre Vorsprung (68) in der sekundären Öffnung (23, 43) anordenbar ist, um den ersten Durchgang (500, 600) und den zweiten Durchgang (200, 300, 400) miteinander fluchtend auszurichten.

7. Möbeleinheit (10) nach einem der vorangegangenen Ansprüche,
wobei das erste Ende (80a) des Verbindungselements (80) ein erstes Gewinde-Segment (84) umfasst, das sich in die erste Kopplungsrichtung (5) erstreckt, und das zweite Ende (80b) des Verbindungselements (80) ein zweites Gewinde-Segment (86) umfasst, das sich in die erste Kopplungsrichtung (5) erstreckt, wobei das erste Gewinde-Segment (84) zum zweiten Gewinde-Segment (86) komplementär ist,
wobei das erste Ende (80a) des Verbindungselements (80) in Bezug auf das zweite Ende (80b) des Verbindungselements (80) drehbar ist, um den Abstand zwischen dem ersten Ende (80a) und dem kugelförmigen Element (86) des zweiten Endes anzupassen.

8. Möbeleinheit (10) nach einem der vorangegangenen Ansprüche,
wobei das erste Ende (80a) des Verbindungselements (80) ein weiteres kugelförmiges Element (81) umfasst, wobei das kugelförmige Element (81) des ersten Endes (80a) in der ersten Aufnahme (32) des Rahmens (11) aufgenommen ist.

9. Möbeleinheit (10) nach einem der vorangegangenen Ansprüche,
wobei das zweite Ende (120b) des Verbindungselements (120) eine Halteklammer (126) umfasst, die dazu ausgelegt ist, ein Rohr oder eine Verkabelung zu umgreifen.

10. Möbeleinheit (10) nach Anspruch 4,
wobei die Möbeleinheit (10) ferner eine entfernbare Trennwand (160) umfasst,
wobei eine erste Kante (161) der entfernbaren Trennwand (160) in der Nut (22, 42), die sich entlang des Rahmens (11) erstreckt, anordenbar ist; und
wobei das zweite Ende (140b) des Verbindungselements (140) ein Paar von Wänden (147), zwischen denen eine Aussparung (148) definiert ist, umfasst, wobei die Aussparung (148) dazu ausgelegt ist, die erste Kante (161) der entfernbaren Trennwand (160) aufzunehmen.

11. Möbeleinheit nach Anspruch 1, wobei die Stützen und Eckverbindungspunktkomponenten mit komplementären Merkmalen bereitgestellt sind, die eine Steckverbindung der Stützen und Eckverbindungspunktkomponenten ermöglichen.

12. Möbeleinheit nach Anspruch 1, wobei jede Eckverbindungspunktkomponente ein hohler Würfel ist, der in jeder Fläche des hohlen Würfels mit einer Öffnung bereitgestellt ist; und wobei die Möbeleinheit ein vertikal anpassbares Trageelement umfasst, das auf einer Eckverbindungspunktkomponente aus der Vielzahl von Eckverbindungspunktkomponenten montiert ist; wobei das Trageelement Folgendes umfasst: ein oberes Element und ein unteres Element, wobei das obere Element und das untere Element mit komplementären Schraubgewinden bereitgestellt sind und wobei das untere Element eine Struktur definiert, die dazu ausgelegt ist, ein Werkzeug aufzunehmen, wobei die Struktur über das obere Element und die Eckverbindungspunktkomponente aus der Vielzahl von Eckverbindungspunktkomponenten zugänglich ist.

13. Möbeleinheit nach einem der vorangegangenen Ansprüche, wobei die Stützen und/oder Eckverbindungspunktkomponenten aus einem Kunststoffmaterial, wie etwa UPVC, bestehen.

14. Bausatz zum Aufbauen einer Möbeleinheit nach einem der vorangegangenen Ansprüche, Folgendes umfassend:
eine Vielzahl von Stützen (20, 40), die durch eine Vielzahl von Eckverbindungspunktkomponenten (30) miteinander verbunden sind, um einen Rahmen (11) auszubilden, und eine oder mehrere Trennwände;
wobei die Stützen (20, 40) eine Anzahl von Öffnungen definieren, in der die eine oder die mehreren Trennwände (12, 160) anordenbar sind;
ein Verbindungselement (50, 60, 80, 120, 140), das auf dem Rahmen (11) in einer ersten Kopplungsrichtung (5) befestigbar ist, wobei das Verbindungselement Folgendes umfasst:
ein erstes Ende (50a, 60a, 80a, 120a, 140a) und ein entgegengesetztes zweites Ende (50b, 60b, 80b, 120b, 140b);
wobei das erste Ende des Verbindungselements eine Endfläche (55, 65, 85, 125, 145) und einen Vorsprung (54, 64, 84, 124, 144) umfasst, der sich von der Endfläche in die erste Kopplungsrichtung (5) erstreckt; und
wobei der Rahmen (11) eine erste Aufnahme (22, 25, 32, 42, 45) umfasst, die dazu ausgelegt ist, den Vorsprung des ersten Endes des Verbindungselements in der ersten Kopplungsrichtung (5) aufzunehmen;
wobei das zweite Ende (80b) des Verbindungselements (80) ferner ein kugelförmiges Element (88) umfasst;
wobei der Satz von Teilen ferner einen Wandanker (90) umfasst, um das kugelförmige Element (88) aufzunehmen, um eine Gelenkverbindung bereitzustellen, wobei der Wandanker (90) ein Paar von Schienen (92), die sich im Wesentlichen parallel erstrecken, und einen zwischen den Schienen (92) definierten offenendigen Kanal (94) umfasst;
wobei das kugelförmige Element (88) in den Kanal (94) einbringbar ist und die Schienen (92) dazu ausgelegt sind, das kugelförmige Element (88) innerhalb des Kanals (94) aufzunehmen.

## Revendications

1. Unité de meuble (10), comprenant :
un cadre (11) formé d'une pluralité d'entretoises (20, 40) reliées par une pluralité de composants d'articulation de sommet (30),
dans laquelle les entretoises (20, 40) définissent un certain nombre d'ouvertures à l'intérieur desquelles des parois de séparation (12, 160) peuvent être placées ;
un connecteur (50, 60, 80, 120, 140) pouvant être fixé au cadre (11) dans une première direction de couplage (5), le connecteur comprenant :
une première extrémité (50a, 60a, 80a, 120a, 140a) et, opposée à celle-ci, une seconde extrémité (50b, 60b, 80b, 120b, 140b) ;
dans laquelle la première extrémité du connecteur comprend une face d'extrémité (55, 65, 85, 125, 145) et une saillie (54, 64, 84, 124, 144) s'étendant à partir de la face d'extrémité dans la première direction de couplage (5) ; et le cadre (11) comprenant en outre une première douille (22, 25, 32, 42, 45) configurée pour recevoir la saillie de la première extrémité du connecteur dans la première direction de couplage (5) ;
dans laquelle la seconde extrémité (80b) du connecteur (80) comprend en outre un élément bulbeux (88) ;
l'unité de meuble (10) comprenant en outre un ancrage mural (90) pour capturer l'élément bulbeux (88) afin de fournir une connexion articulée, l'ancrage mural (90) comprenant une paire de rails (92) s'étendant sensiblement parallèlement et un canal à extrémité ouverte (94) défini entre les rails (92) ;
dans laquelle l'élément bulbeux (88) peut être inséré dans le canal (94) et les rails (92) sont configurés pour capturer l'élément bulbeux (88) à l'intérieur du canal (94).

2. Unité de meuble (10) selon la revendication 1, dans laquelle
la saillie (54, 64, 144) présente une forme de section transversale définissant un périmètre rectangulaire (56, 66, 146),
et la première douille (22, 32, 42) du cadre (11) définit une ouverture (21, 31, 41, 220, 320, 420) correspondant au périmètre rectangulaire de la saillie pour positionner la saillie à des orientations prédéterminées par rapport à la première douille ; et
dans laquelle la saillie du connecteur peut être insérée dans l'ouverture de la première douille pour amener la face d'extrémité (55, 65, 145) de la première extrémité (50a, 60a, 140a) du connecteur à venir en butée contre le cadre (11) et restreindre une insertion plus profonde.

3. Unité de meuble (10) selon la revendication 2,
le composant d'articulation de sommet (30) comprenant en outre une cavité (350) délimitée par une surface interne (390) d'une paroi (39) du composant d'articulation de sommet (30),
dans laquelle l'ouverture (31) de la première douille (32) s'étend à travers la paroi (39) jusqu'à la surface interne (390) ;
la première extrémité (50a, 60a) du connecteur comprenant en outre une première attache (51, 61) pour fixer le connecteur au composant d'articulation de sommet (30),
dans laquelle la première attache (51, 61) comprend un élément flexible (51a, 61a) s'étendant dans la première direction de couplage (5) et un crochet (51b, 61b) s'étendant à partir de l'élément flexible (51a, 61a) ;
dans laquelle la première extrémité (50a, 60a) du connecteur peut être insérée dans la première douille (32) pour positionner la première attache (51, 61) dans la cavité (350) et amener le crochet (51b, 61b) à attraper la paroi (39) du composant d'articulation de sommet (30).

4. Unité de meuble (10) selon l'une quelconque des revendications précédentes,
dans laquelle la première douille (22, 42) est fournie sous la forme d'une rainure (22, 42) s'étendant le long du cadre, et dans laquelle :
la rainure (22, 42) est délimitée entre une paire de parois de rainure (28) définissant une forme de queue d'aronde, et
les parois de rainure (28, 48) sont configurées pour capturer la saillie (64, 144) du connecteur (60, 140).

5. Unité de meuble (10) selon l'une quelconque des revendications 2 à 4,
le connecteur (50, 60) formant un premier passage (500, 600) s'étendant entre une première ouverture (502, 602) dans la première extrémité (50a, 60a) du connecteur et une seconde ouverture (504, 604) dans la seconde extrémité (50b, 60b) du connecteur,
le cadre (11) formant un second passage (200, 300, 400) s'étendant d'une première ouverture (23, 33, 43) à une seconde ouverture (23, 33, 43) formée dans le côté opposé du cadre (11),
dans laquelle le premier passage (500, 600) et le second passage (200, 300, 400) s'étendent dans la première direction de couplage (5) ;
unité de meuble (10) comprenant en outre une patte (70) comprenant :
une extrémité de pied (73) et une extrémité filetée (74),
l'extrémité filetée (74) pouvant être insérée dans une section taraudée du premier passage (500, 600) s'étendant à travers le connecteur (50, 60) ;
dans laquelle la patte (70) est configurée pour venir en prise avec un outil pouvant être insérée à travers le second passage (200, 300, 400) et le premier passage (500, 600) pour faire tourner la patte (70) dans la section taraudée du premier passage (500, 600) entre une première configuration et une seconde configuration, la distance entre le connecteur (50, 60) et l'extrémité de pied (73) de la patte (70) étant différente dans la première configuration et la seconde configuration.

6. Unité de meuble (10) selon la revendication 5,
le connecteur (60) comprenant en outre une saillie secondaire (68) s'étendant à partir de la première extrémité (60a) du connecteur dans la première direction de couplage (5),
dans laquelle une entretoise (20, 40) de la pluralité d'entretoises (20, 40) définit une ouverture secondaire (23, 43) configurée pour recevoir la saillie secondaire (68) du connecteur (60),
dans laquelle la saillie secondaire (68) et le premier passage (500, 600) du connecteur sont séparés par une distance correspondant à la distance entre l'ouverture secondaire (23, 43) et le second passage (200, 300, 400) de sorte que la saillie secondaire (68) peut être positionnée dans l'ouverture secondaire (23, 43) pour aligner le premier passage (500, 600) et le second passage (200, 300, 400).

7. Unité de meuble (10) selon l'une quelconque des revendications précédentes,
dans laquelle la première extrémité (80a) du connecteur (80) comprend un premier segment fileté (84) s'étendant dans la première direction de couplage (5) et la seconde extrémité (80b) du connecteur (80) comprend un second segment fileté (86) dans la première direction de couplage (5), le premier segment fileté (84) étant complémentaire du second segment fileté (86),
dans laquelle la première extrémité (80a) du connecteur (80) peut tourner par rapport à la seconde extrémité (80b) du connecteur (80) pour ajuster la distance entre la première extrémité (80a) et l'élément bulbeux (86) de la seconde extrémité.

8. Unité de meuble (10) selon l'une quelconque des revendications précédentes,
dans laquelle la première extrémité (80a) du connecteur (80) comprend en outre un élément bulbeux (81),
dans laquelle l'élément bulbeux (81) de la première extrémité (80a) est capturé dans la première douille (32) du cadre (11).

9. Unité de meuble (10) selon l'une quelconque des revendications précédentes,
dans laquelle la seconde extrémité (120b) du connecteur (120) comprend un support (126) configuré pour capturer un tuyau ou un câblage.

10. Unité de meuble (10) selon la revendication 4,
l'unité de meuble (10) comprenant en outre une paroi de séparation amovible (160),
dans laquelle un premier bord (161) de la paroi de séparation amovible (160) peut être placé dans la rainure (22, 42) s'étendant le long du cadre (11) ; et
dans laquelle la seconde extrémité (140b) du connecteur (140) comprend une paire de parois (147) entre lesquelles un évidement (148) est défini, l'évidement (148) étant configuré pour recevoir le premier bord (161) de la paroi de séparation amovible (160).

11. Unité de meuble selon la revendication 1, dans laquelle les entretoises et les composants d'articulation de sommet sont pourvus de formations complémentaires qui permettent une connexion par ajustement serré des entretoises et des composants d'articulation de sommet.

12. Unité de meuble selon la revendication 1, dans laquelle chaque composant d'articulation de sommet est un cube creux pourvu d'une ouverture dans chaque face du cube creux ; et l'unité de meuble comprenant un élément de support ajustable verticalement adapté à un composant d'articulation de sommet de la pluralité de composants d'articulation de sommet ; l'élément de support comprenant : un élément supérieur et un élément inférieur, l'élément supérieur et l'élément inférieur étant munis de filetages complémentaires, et dans laquelle l'élément inférieur définit une formation configurée pour recevoir un outil, la formation étant accessible à travers l'élément supérieur et ledit composant d'articulation de sommet de la pluralité de composants d'articulation de sommet.

13. Unité de meuble selon l'une quelconque des revendications précédentes, dans laquelle les entretoises et/ou les composants d'articulation de sommet sont fabriqués à partir d'une matière plastique, telle que l'UPVC.

14. Kit de pièces pour construire une unité de meuble selon l'une quelconque des revendications précédentes, comprenant :
une pluralité d'entretoises (20, 40) pouvant être reliées par une pluralité de composants d'articulation de sommet (30) pour former un cadre (11), et une ou plusieurs parois de séparation ;
dans lequel les entretoises (20, 40) définissent un nombre d'ouvertures à l'intérieur desquelles une ou des parois de séparation (12, 160) peuvent être positionnées ; un connecteur (50, 60, 80, 120, 140) pouvant être fixé au cadre (11) dans une première direction de couplage (5), le connecteur comprenant :
une première extrémité (50a, 60a, 80a, 120a, 140a) et, opposée à celle-ci, une seconde extrémité (50b, 60b, 80b, 120b, 140b) ;
dans laquelle la première extrémité du connecteur comprend une face d'extrémité (55, 65, 85, 125, 145) et une saillie (54, 64, 84, 124, 144) s'étendant à partir de la face d'extrémité dans la première direction de couplage (5) ; et le cadre (11) comprenant une première douille (22, 25, 32, 42, 45) configurée pour recevoir la saillie de la première extrémité du connecteur dans la première direction de couplage (5) ;
dans lequel la seconde extrémité (80b) du connecteur (80) comprend en outre un élément bulbeux (88) ;
le kit de pièces comprenant en outre un ancrage mural (90) pour capturer l'élément bulbeux (88) afin de fournir une connexion articulée, l'ancrage mural (90) comprenant une paire de rails (92) s'étendant sensiblement parallèlement et un canal à extrémité ouverte (94) défini entre les rails (92) ;
dans lequel l'élément bulbeux (88) peut être inséré dans le canal (94) et les rails (92) sont configurés pour capturer l'élément bulbeux (88) à l'intérieur du canal (94).
